# EUROPEAN PATENT SPECIFICATION

(11) **EP 2 647 559 B1**
(45) Date of publication and mention of the grant of the patent: **17.01.2018**
(21) Application number: 13162277.1
(22) Date of filing: 04.04.2013
(51) Int. Cl.: F02D 41/06, F02D 41/00, F02M 35/16, F02M 35/10, F02D 19/08, F02D 9/10

(54) **Internal combustion engine and straddle-type vehicle including the same**
Verbrennungsmotor und damit ausgestattetes Sattelfahrzeug
Moteur à combustion interne et véhicule de type à selle comprenant celui-ci

(30) Priority: 06.04.2012 JP 2012087612
(43) Date of publication of application: 09.10.2013
(73) Proprietor: Yamaha Hatsudoki Kabushiki Kaisha, Iwata-shi, Shizuoka 438-8501 (JP)
(72) Inventor: Torigoshi, Masaki, Iwata-shi, Shizuoka 438-8501 (JP); Kinoshita, Hisatoshi, Iwata-shi, Shizuoka 438-8501 (JP)
(74) Representative: Grünecker Patent- und Rechtsanwälte PartG mbB

(56) References cited:
- WO-A1-2005/121531
- DE-A1- 19 848 368
- DE-A1-102004 028 708
- JP-A- 2007 085 257
- US-A- 5 113 826
- US-A- 5 121 724
- US-A1- 2003 116 126
- US-A1- 2009 076 706
- US-B2- 6 910 457
- "Excerpt ED - Bauer H", 1 October 1996 (1996-10-01), AUTOMOTIVE HANDBOOK ( BOSCH),, PAGE(S) 396 - 397, XP008175065, ISBN: 1-56091-918-3 * figure; page 397 *

## Description

The present invention relates to a four-stroke internal combustion engine and a straddle-type vehicle including the internal combustion engine. Moreover, the present invention relates to a method for controlling a four-stroke internal combustion engine.

Prior art document DE 10 2004 028708 A1 relates to an internal combustion engine with a bypass valve arranged within a bypass channel for bypassing a throttle valve. Said bypass valve can be controlled fast enough to open and close safe within the opening duration of the intake valve in an intake stroke. Said prior art document provides an internal combustion engine, wherein pump lost is reduced, especially, at intermediate rotational speed and low or intermediate load of the engine.

In a conventionally known technique such as one disclosed in JP-A-2010-48098, for example, an opening of a throttle valve at startup of an internal combustion engine is set to be smaller than a set opening of the throttle valve during idling, and the throttle valve is gradually opened when an engine rotational speed is equal to or higher than a given rotational speed.

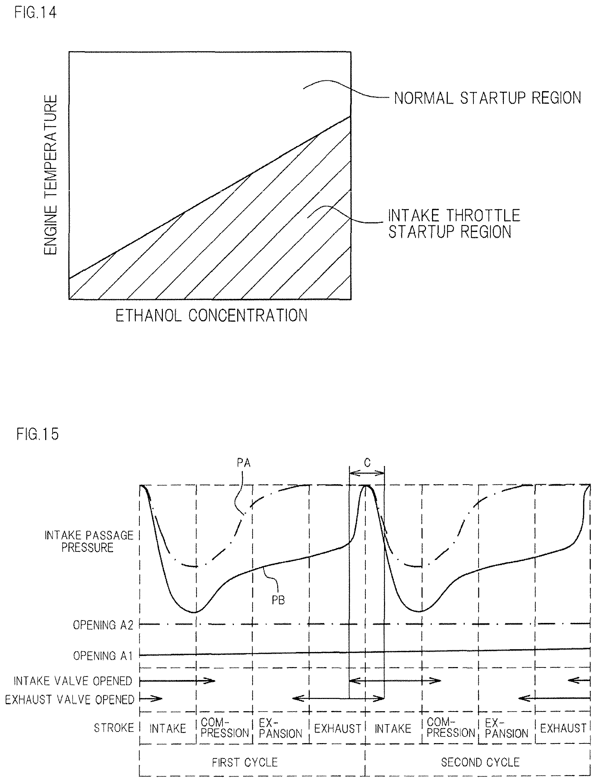

FIG. 15 is a time chart of an example of the conventional technique. FIG. 15 illustrates, for example, changes in intake pipe pressure in two cycles from startup. An opening B of a throttle valve is set to be smaller than a set opening A of the throttle valve during idling. The opening B of the throttle valve is gradually increased over a plurality of cycles.

In FIG. 15, a reference sign "PA" represents an intake pipe pressure obtained when the throttle valve opening is A, and a reference sign "PB" represents an intake pipe pressure obtained when the throttle valve opening is B. As illustrated in FIG. 15, when an intake valve is opened, the intake pipe pressure is reduced in an intake stroke. When the throttle valve opening is set at the opening B smaller than the opening A, the intake pipe pressure PB obtained in this case is lower than the intake pipe pressure PA. The amount of intake air in the intake stroke changes in accordance with the throttle valve opening. The amount of intake air obtained when the throttle valve opening is B is smaller than the amount of intake air obtained when the throttle valve opening is A.

When the throttle valve opening is reduced in order to decrease the amount of intake air, the intake pipe pressure is reduced, and therefore, burnt gas inside a combustion chamber is likely to flow backward to an intake pipe in an overlap period C during which the intake valve and exhaust valve are opened concurrently. The burnt gas flows into the combustion chamber in the intake stroke of the next cycle (second cycle). Hence, in the next cycle, it is difficult to introduce air, and the amount of burnt gas inside the combustion chamber is adversely increased. As a result, combustion becomes disadvantageously unstable, and misfiring is unfortunately likely to occur. Thus, in the conventional technique, the amount of intake air and the amount of burnt gas cannot be controlled independently, and therefore, the amount of intake air is controlled only within certain limits. For example, there is a need for reducing the amount of intake air without increasing the amount of burnt gas, in order to achieve lower fuel consumption during idling or low-load running, and also there is a need for increasing the amount of intake air without reducing the amount of burnt gas, in order to reduce pumping loss. Unfortunately, the conventional technique cannot meet these needs.

Accordingly, it is an object of the present invention to provide a four-stroke internal combustion engine, a straddle-type vehicle including the internal combustion engine and a method for controlling a four-stroke internal combustion engine, which is enabling independent control of the amount of air sucked into a combustion chamber and the amount of burnt gas inside the combustion chamber. Preferably, such control is used at startup of an internal combustion engine.

According to the present invention said object is solved by a four-stroke internal combustion engine having the features of independent claim 1. Moreover, said object is solved by a straddle-type vehicle having the features of claim **11**. Furthermore, said object is solved by a method for controlling a four-stroke internal combustion engine having the features of independent claim **12**. Preferred embodiments are laid down in the dependent claims.

An internal combustion engine according to a preferred embodiment of the present teaching is a four-stroke internal combustion engine including: an intake passage through which air is guided to a combustion chamber; an intake valve that opens and closes communication between the combustion chamber and the intake passage; a fuel injection device through which a fuel is injected to the intake passage or the combustion chamber; a further valve disposed in the intake passage; and a controller that controls the further valve. The controller is configured to change an opening of the further valve from an opening equal to or smaller than a first opening to a second opening greater than the first opening and from the second opening greater than the first opening to the opening equal to or smaller than the first opening during a period between start of an intake stroke of one cycle and end of an exhaust stroke thereof.

In the internal combustion engine according to the preferred embodiment of the present teaching, the opening of the further valve is changed from the opening equal to or smaller than the first opening to the second opening greater than the first opening and is further changed from the second opening greater than the first opening to the opening equal to or smaller than the first opening in one cycle including intake, compression, expansion and exhaust strokes. The amount of intake air is decided mainly in accordance with the opening of the further valve during a period in which the intake valve is opened. Therefore, the amount of intake air can be adjusted in accordance with the timing of changing of the opening of the further valve from the opening equal to or smaller than the first opening to the second opening greater than the first opening when the intake valve is opened. Meanwhile, the amount of burnt gas is decided mainly in accordance with a pressure of the intake passage upon opening of the intake valve. The pressure of the intake passage is decided in accordance with the timing of changing of the opening of the further valve from the second opening greater than the first opening to the opening equal to or smaller than the first opening. Therefore, the amount of burnt gas can be controlled by adjusting the timing of changing of the opening of the further valve to the opening equal to or smaller than the first opening. The timing of changing of the opening of the further valve from the opening equal to or smaller than the first opening to the second opening greater than the first opening, and the timing of changing of the opening of the further valve from the second opening greater than the first opening to the opening equal to or smaller than the first opening can be adjusted independently. Consequently, according to the preferred embodiment of the present teaching, the amount of intake air and the amount of burnt gas can be controlled independently.

According to one preferred embodiment of the present teaching, the controller is preferably configured to change the opening of the further valve from the opening equal to or smaller than the first opening to the second opening greater than the first opening when the intake valve is opened.

Thus, the amount of intake air is controlled independently from the amount of burnt gas.

According to one preferred embodiment of the present teaching, the controller is preferably configured to change the opening of the further valve from the opening equal to or smaller than the first opening to the second opening greater than the first opening and from the second opening greater than the first opening to the opening equal to or smaller than the first opening when the intake valve is opened.

Thus, the amount of intake air is controlled independently from the amount of burnt gas.

According to one preferred embodiment of the present teaching, the controller is preferably configured to change the opening of the further valve from the second opening greater than the first opening to the opening equal to or smaller than the first opening when the intake valve is closed.

Thus, the amount of burnt gas is controlled independently from the amount of intake air.

According to one preferred embodiment of the present teaching, the controller is preferably configured to change the opening of the further valve from the opening equal to or smaller than the first opening to the second opening greater than the first opening and from the second opening greater than the first opening to the opening equal to or smaller than the first opening when the intake valve is closed.

Thus, the amount of burnt gas is controlled independently from the amount of intake air.

According to one preferred embodiment of the present teaching, the controller is preferably configured to change the opening of the further valve from the opening equal to or smaller than the first opening to the second opening greater than the first opening and from the second opening greater than the first opening to the opening equal to or smaller than the first opening when the intake valve is opened, and to change the opening of the further valve from the opening equal to or smaller than the first opening to the second opening greater than the first opening and from the second opening greater than the first opening to the opening equal to or smaller than the first opening when the intake valve is closed.

Thus, the amount of intake air and the amount of burnt gas are controlled independently.

According to one preferred embodiment of the present teaching, the controller is preferably configured to change the opening of the further valve from the opening equal to or smaller than the first opening to the second opening greater than the first opening when the intake valve is opened, keep the opening of the further valve at the second opening greater than the first opening until the intake valve is closed, and change the opening of the further valve from the second opening greater than the first opening to the opening equal to or smaller than the first opening when the intake valve is closed.

Thus, the amount of intake air and the amount of burnt gas are controlled independently.

According to one preferred embodiment of the present teaching, the intake passage preferably includes a main passage, and a bypass passage provided in parallel with the main passage. The further valve is preferably disposed in the bypass passage.

Thus, the further valve can be reduced in size as compared with a valve disposed in an intake passage which is a single passage. Hence, the further valve can be quickly operated with ease. Accordingly, the independent control of the amount of intake air and the amount of burnt gas is facilitated.

According to one preferred embodiment of the present teaching, the further valve preferably includes a solenoid valve.

A solenoid valve is operable at high speed and is relatively inexpensive. Thus, the valve that is quickly operable can be relatively inexpensively provided. Accordingly, the internal combustion engine capable of controlling the amount of intake air and the amount of burnt gas independently can be relatively inexpensively fabricated.

According to one preferred embodiment of the present teaching, the solenoid valve is preferably adapted so as to be switchable between a closed state in which the bypass passage is closed and an open state in which the bypass passage is opened. The first opening preferably is an opening obtained when the solenoid valve is in the closed state.

Thus, the control is facilitated because it is only necessary to switch the solenoid valve between the closed state and the open state. Accordingly, the independent control of the amount of intake air and the amount of burnt gas is further facilitated.

According to the present teaching, the cycle preferably is a cycle prior to occurrence of a first explosion in the combustion chamber or a cycle in which the first explosion occurs in the combustion chamber.

Thus, startup performance of the internal combustion engine can be enhanced.

According to one preferred embodiment of the present teaching, the internal combustion engine preferably further includes: an exhaust passage through which exhaust gas inside the combustion chamber is discharged; and an exhaust valve that opens and closes communication between the combustion chamber and the exhaust passage. Both of the intake and exhaust valves are preferably opened in a portion of the intake stroke and/or a portion of the exhaust stroke.

When both of the intake and exhaust valves are opened, burnt gas inside the combustion chamber is likely to flow backward to the intake passage. Therefore, the opening of the further valve is changed from the opening equal to or smaller than the first opening to the second opening greater than the first opening, and is further changed to the opening equal to or smaller than the first opening, thus making it possible to inhibit burnt gas from flowing backward to the intake passage.

According to one preferred embodiment of the present teaching, the fuel preferably contains alcohol.

The alcohol-containing fuel, i.e., the fuel partially containing alcohol or the fuel containing alcohol in its entirety, has low volatility and is resistant to vaporization, and therefore, the above-described effects are more pronounced.

According to one preferred embodiment of the present teaching, the internal combustion engine preferably is a single-cylinder internal combustion engine.

As compared with a multi-cylinder internal combustion engine in which air is supplied to a plurality of combustion chambers from one intake passage, the single-cylinder internal combustion engine can control the amount of intake air and the amount of burnt gas with high accuracy by changing the opening of the further valve.

A straddle-type vehicle according to one preferred embodiment of the present teaching includes the internal combustion engine according to one of the preferred embodiments of the present teaching described above.

According to the preferred embodiment of the present teaching, the straddle-type vehicle that achieves the above-described advantages can be fabricated.

### ADVANTAGEOUS EFFECTS OF INVENTION

Various preferred embodiments of the present teaching can provide a new technique for enabling independent control of the amount of air sucked into a combustion chamber and the amount of burnt gas inside the combustion chamber at startup of an internal combustion engine.

### BRIEF DESCRIPTION OF DRAWINGS

FIG. 1 is a side view illustrating a motorcycle according to a preferred embodiment of the present teaching.
FIG. 2 is a schematic diagram of an engine and a controller according to the preferred embodiment of the present teaching.
FIG. 3A is a schematic diagram of a valve device according to the preferred embodiment of the present teaching.
FIG. 3B is a schematic diagram of the valve device according to the preferred embodiment of the present teaching.
FIG. 4 is a block diagram for control of an opening of a first valve according to the preferred embodiment of the present teaching.
FIG. 5A is a time chart of first independent control.
FIG. 5B is a time chart of second independent control.
FIG. 5C is a time chart of third independent control.
FIG. 5D is a time chart of fourth independent control.
FIG. 6A is a time chart of first startup control.
FIG. 6B is a time chart of second startup control.
FIG. 6C is a time chart of third startup control.
FIG. 6D is a time chart of fourth startup control.
FIG. 7 is a flow chart of the startup control including determination steps.
FIG. 8 is a time chart of the startup control including determination steps.
FIG. 9A is a schematic diagram illustrating a state of the valve device before startup of the engine according to the preferred embodiment of the present teaching.
FIG. 9B is a schematic diagram illustrating a state of the valve device during cold idling of the engine according to the preferred embodiment of the present teaching.
FIG. 9C is a schematic diagram illustrating a state of the valve device during warm idling of the engine according to the preferred embodiment of the present teaching.
FIG. 10 is a graph illustrating time-varying changes in the amount of intake air before and after startup of the engine according to the preferred embodiment of the present teaching.
FIG. 11A is a schematic diagram of a valve device according to an alternative preferred embodiment of the present teaching.
FIG. 11B is a schematic diagram of the valve device according to the alternative preferred embodiment of the present teaching.
FIG. 11C is a schematic diagram of the valve device according to the alternative preferred embodiment of the present teaching.
FIG. 12A is a schematic diagram illustrating a state of a valve device before startup of an engine according to a variation of the present teaching.
FIG. 12B is a schematic diagram illustrating a state of the valve device during cold idling of the engine according to the variation of the present teaching.
FIG. 12C is a schematic diagram illustrating a state of the valve device during warm idling of the engine according to the variation of the present teaching.
FIG. 13A is a schematic diagram illustrating a state of a valve device before startup of an engine according to an alternative variation of the present teaching.
FIG. 13B is a schematic diagram illustrating a state of the valve device during cold idling of the engine according to the alternative variation of the present teaching.
FIG. 13C is a schematic diagram illustrating a state of the valve device during warm idling of the engine according to the alternative variation of the present teaching.
FIG. 14 is a graph illustrating a relationship between an engine temperature and an ethanol concentration.
FIG. 15 is a time chart illustrating relationships between throttle valve openings and intake pipe pressures.

### DESCRIPTION OF EMBODIMENTS

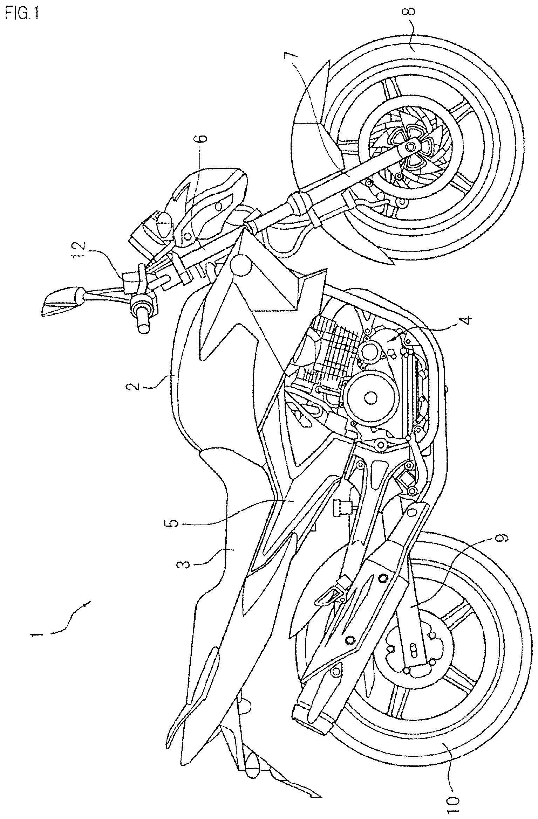

Hereinafter, preferred embodiments of the present teaching will be described. As illustrated in FIG. 1, a straddle-type vehicle according to the present preferred embodiment is a motorcycle 1. However, the motorcycle 1 is not limited to any particular type of motorcycle, but may be any motorcycle such as a "scooter type", "moped type", "off-road type" or "street type" motorcycle. The straddle-type vehicle according to the present teaching is not limited to a motorcycle, but may be an ATV (All Terrain Vehicle), for example. Note that the term "straddle-type vehicle" refers to a vehicle that a rider straddles when getting on the vehicle.

Examples of fuels usable for the motorcycle 1 include gasoline, alcohol such as ethanol, and a fuel mixture of gasoline and alcohol. The following description will be made on the assumption that ethanol having low volatility at low temperature or a fuel mixture of ethanol and gasoline, for example, is used as a fuel in the present preferred embodiment. However, the fuel used in the present preferred embodiment is not limited to an alcohol-containing fuel.

As illustrated in FIG. 1, the motorcycle 1 preferably includes: a fuel tank 2; a seat 3 on which a rider sits while riding on the motorcycle 1; an engine 4 serving as an internal combustion engine; and a body frame 5 that supports these components. A head pipe 6 is provided forward of the body frame 5 and supports a steering shaft (not illustrated). A handlebar 12 is provided at an upper portion of the steering shaft. A front fork 7 is provided at a lower portion of the steering shaft. A front wheel 8 is rotatably supported at a lower end portion of the front fork 7. The body frame 5 supports a swing arm 9 in such a manner that the swing arm 9 is swingable. A rear wheel 10 is rotatably supported at a rear end portion of the swing arm 9.

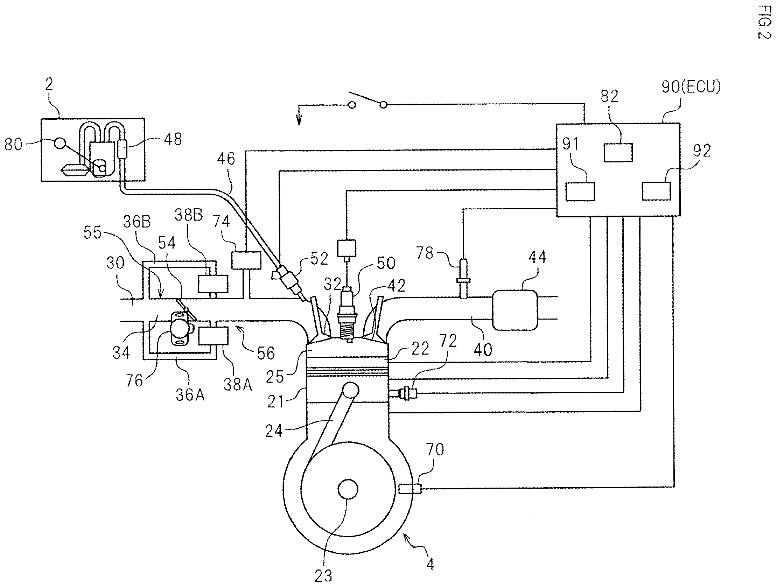

As illustrated in FIG. 2, the engine 4 preferably includes: a cylinder 21; a piston 22 that reciprocates inside the cylinder 21; a crankshaft 23; and a connecting rod 24 through which the piston 22 and the crankshaft 23 are connected to each other. The engine 4 is a four-stroke, single-cylinder engine that repeats cycles each including intake, compression, expansion and exhaust strokes. It is to be noted that the engine 4 is not limited to a single-cylinder engine but may be a multi-cylinder engine. The engine 4 preferably further includes: a fuel injection valve 52 serving as a fuel injection device through which a fuel is injected; and an ignition device 50 that ignites the fuel inside a combustion chamber 25. The engine 4 is provided with: a rotational speed sensor 70 that detects a rotational speed of the crankshaft 23; and a temperature sensor 72 that detects a temperature of the engine 4. Note that the term "rotational speed of the crankshaft 23" refers to a rotational frequency of the crankshaft 23 per unit time. Hereinafter, the rotational speed of the crankshaft 23 will simply be referred to as the rotational speed of the engine 4. The temperature sensor 72 may detect a temperature of a portion of the engine 4 (e.g., the cylinder 21), or may detect a temperature of cooling water when the engine 4 is a water-cooled engine. In other words, the temperature sensor 72 may directly detect the temperature of the engine 4, or may indirectly detect the temperature of the engine 4 by detecting the temperature of cooling water, for example.

The engine 4 preferably further includes: an intake passage 30 through which air is introduced into the combustion chamber 25; an intake valve 32 that opens and closes communication between the intake passage 30 and the combustion chamber 25; an exhaust passage 40 through which exhaust gas inside the combustion chamber 25 is discharged; and an exhaust valve 42 that opens and closes communication between the combustion chamber 25 and the exhaust passage 40. In the present preferred embodiment, the fuel injection valve 52 is disposed so as to inject the fuel into the intake passage 30. It is also contemplated that the fuel injection valve 52 may directly inject the fuel into the combustion chamber 25. Alternatively, the engine 4 may include two types of fuel injection valves, one of which injects the fuel into the intake passage 30 and the other one of which injects the fuel into the combustion chamber 25. The fuel injection device that injects the fuel into the intake passage 30 is not limited to the fuel injection valve 52 but may be a carburetor.

The exhaust passage 40 is provided with a catalyst 44. The exhaust passage 40 is further provided with an 02 sensor 78 that serves as an air-fuel ratio sensor and detects oxygen contained in the exhaust gas. The air-fuel ratio sensor may be a sensor at least capable of detecting whether an air-fuel ratio is in a "rich" region or a "lean" region. Therefore, the 02 sensor 78 according to the present preferred embodiment can detect whether the air-fuel ratio is in the rich region or lean region. Alternatively, a linear λ sensor may naturally be used as the air-fuel ratio sensor.

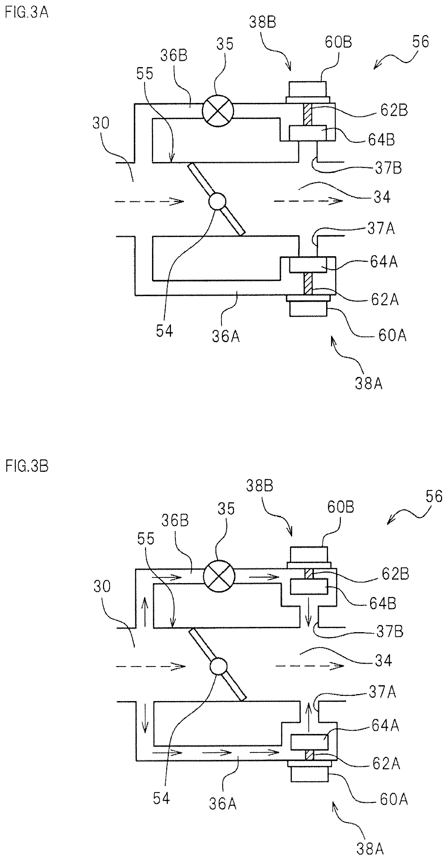

The intake passage 30 is provided with a pressure sensor 74 that detects an intake pipe pressure which is an internal pressure of the intake passage 30. The intake passage 30 preferably includes: a main passage 34 in which a throttle valve 54 serving as a main valve is contained; a first bypass passage 36A through which regions of the main passage 34 located upstream and downstream of the throttle valve 54 are communicated with each other; and a second bypass passage 36B through which the regions of the main passage 34 located upstream and downstream of the throttle valve 54 are communicated with each other. The first and second bypass passages 36A and 36B are mutually independent bypass passages. The main passage 34, the first bypass passage 36A and the second bypass passage 36B are arranged in parallel to each other. As illustrated in FIG. 3A, a first passage port 37A is provided between the first bypass passage 36A and the main passage 34. A second passage port 37B is provided between the second bypass passage 36B and the main passage 34. In the present preferred embodiment, the first and second bypass passages 36A and 36B and a throttle body 55 that constitutes the main passage 34 are separate components, but the first and second bypass passages 36A and 36B may alternatively be integral with the throttle body 55. It is also contemplated that either one of the first and second bypass passages 36A and 36B may be integral with the throttle body 55, and the other one of the first and second bypass passages 36A and 36B and the throttle body 55 may be separate components.

The second bypass passage 36B is provided with a flow restrictor 35 capable of adjusting the amount of air flowing through the second bypass passage 36B. The flow restrictor 35 is a valve whose opening is adjustable by a pilot screw, for example. Note that the flow restrictor 35 does not necessarily have to be provided in the second bypass passage 36B. Alternatively, the flow restrictor 35 may be provided in the first bypass passage 36A, or may be provided in both of the first and second bypass passages 36A and 36B. Thus, adjustment of an air flow rate can be further facilitated.

As illustrated in FIG. 2, the throttle valve 54 is provided with a throttle position sensor 76 that detects an opening of the throttle valve 54. The intake passage 30 preferably further includes a valve device 56 capable of opening and closing the first and second bypass passages 36A and 36B.

A specific structure of the valve device 56 is not limited to any particular structure. The valve device 56 may preferably have the following structure, for example.

As illustrated in FIGS. 3A and 3B, the valve device 56 preferably includes: a first valve 38A provided in the first bypass passage 36A so as to serve as a bypass valve; and a second valve 38B provided in the second bypass passage 36B so as to serve as a bypass valve.

The first valve 38A is provided in a downstream region of the first bypass passage 36A. By adjusting an opening of the first valve 38A, a flow passage cross-sectional area of the first bypass passage 36A can be changed. Thus, the amount of air flowing through the first bypass passage 36A can be controlled. The first valve 38A preferably includes a solenoid valve that includes: a solenoid 60A; a shaft 62A driven by the solenoid 60A so as to be moved in a vertical direction in FIGS. 3A and 3B; and a valve body 64A attached to a tip of the shaft 62A.

In the first valve 38A, the direction of movement of the shaft 62A changes in response to whether or not power is supplied to the solenoid 60A. Upon movement of the shaft 62A in a direction away from the main passage 34 (i.e., a downward direction in FIGS. 3A and 3B), the valve body 64A also moves in the same direction to open the first passage port 37A. Thus, the first bypass passage 36A is opened (see FIG. 3B). Conversely, upon movement of the shaft 62A in a direction toward the main passage 34 (i.e., an upward direction in FIGS. 3A and 3B) by the solenoid 60A, the valve body 64A also moves in the same direction to close the first passage port 37A (see FIG. 3A). Thus, the first bypass passage 36A is closed. In the present preferred embodiment, the first bypass passage 36A is closed when power is not supplied to the solenoid 60A. This state will be referred to as a "closed state". Conversely, the first bypass passage 36A is opened when power is supplied to the solenoid 60A. This state will be referred to as an "open state". Note that the first valve 38A may be adapted so that the first valve 38A enters the closed state when power is supplied to the solenoid 60A, and enters the open state when power is not supplied to the solenoid 60A. The position of the first valve 38A in the first bypass passage 36A is not limited to any particular position. For example, the first valve 38A may be provided in an upstream region of the first bypass passage 36A.

The second valve 38B is provided in a downstream region of the second bypass passage 36B. By adjusting an opening of the second valve 38B, a flow passage cross-sectional area of the second bypass passage 36B can be changed. Thus, the amount of air flowing through the second bypass passage 36B can be controlled. The second valve 38B preferably includes a solenoid valve that includes: a solenoid 60B; a shaft 62B driven by the solenoid 60B so as to be moved in the vertical direction in FIGS. 3A and 3B; and a valve body 64B attached to a tip of the shaft 62B.

In the second valve 38B, the direction of movement of the shaft 62B changes in response to whether or not power is supplied to the solenoid 60B. Upon movement of the shaft 62B in a direction away from the main passage 34 (i.e., an upward direction in FIGS. 3A and 3B), the valve body 64B also moves in the same direction to open the second passage port 37B. Thus, the second bypass passage 36B is opened (see FIG. 3B). Conversely, upon movement of the shaft 62B in a direction toward the main passage 34 (i.e., a downward direction in FIGS. 3A and 3B) by the solenoid 60B, the valve body 64B also moves in the same direction to close the second passage port 37B. Thus, the second bypass passage 36B is closed (see FIG. 3A). In the present preferred embodiment, the second bypass passage 36B is opened when power is not supplied to the solenoid 60B. This state will be referred to as an "open state". Conversely, the second bypass passage 36B is closed when power is supplied to the solenoid 60B. This state will be referred to as a "closed state". Note that the second valve 38B may be adapted so that the second valve 38B enters the open state when power is supplied to the solenoid 60B, and enters the closed state when power is not supplied to the solenoid 60B. The position of the second valve 38B in the second bypass passage 36B is not limited to any particular position. For example, the second valve 38B may be provided in an upstream region of the second bypass passage 36B.

The flow rate of air flowing through the first bypass passage 36A per unit time when the first bypass passage 36A is opened, and the flow rate of air flowing through the second bypass passage 36B per unit time when the second bypass passage 36B is opened are not limited to any particular flow rates. However, when these flow rates are different from each other, the amount of air (amount of intake air) flowing through the intake passage 30 can be extensively adjusted.

As illustrated in FIG. 2, the fuel tank 2 and the fuel injection valve 52 are connected to each other through a fuel pipe 46. A fuel pump 48 and a fuel sensor 80 are provided inside the fuel tank 2. The fuel pump 48 supplies the fuel to the fuel pipe 46. The fuel sensor 80 detects the amount of the fuel inside the fuel tank 2. A specific configuration of the fuel sensor 80 is not limited to any particular configuration. For example, a known sensor such as a level sensor may suitably be used as the fuel sensor 80. Note that in the motorcycle 1 according to the present preferred embodiment, a percentage of ethanol mixed in the fuel is estimated on the basis of a value detected by the 02 sensor 78, and therefore, a sensor that detects an ethanol concentration in the fuel inside the fuel tank 2 is not provided. However, a sensor that detects an ethanol concentration in the fuel inside the fuel tank 2 may naturally be provided so as to directly detect the percentage of ethanol mixed in the fuel. Although a fuel pressure regulator (not illustrated) that adjusts a fuel pressure is disposed inside the fuel tank 2, the fuel pressure regulator may alternatively be disposed outside the fuel tank 2. For example, the fuel pressure regulator may be disposed between the fuel pipe 46 and the fuel injection valve 52. In that case, the fuel pressure regulator is connected to the fuel tank 2 via a return pipe (not illustrated).

The motorcycle 1 preferably includes an ECU (Electric Control Unit) 90 serving as a controller that controls the engine 4. The ECU 90 preferably includes: a computing section 91 that performs various computations for control described later; and a storage section 92 that stores a control program and/or various pieces of information for performing the control described later. The computing section 91 and the storage section 92 are not limited to any particular hardware configurations. For example, a CPU may suitably be used as the computing section 91, and a memory such as a ROM or a RAM may suitably be used as the storage section 92. In the present preferred embodiment, the storage section 92 preferably includes a nonvolatile memory.

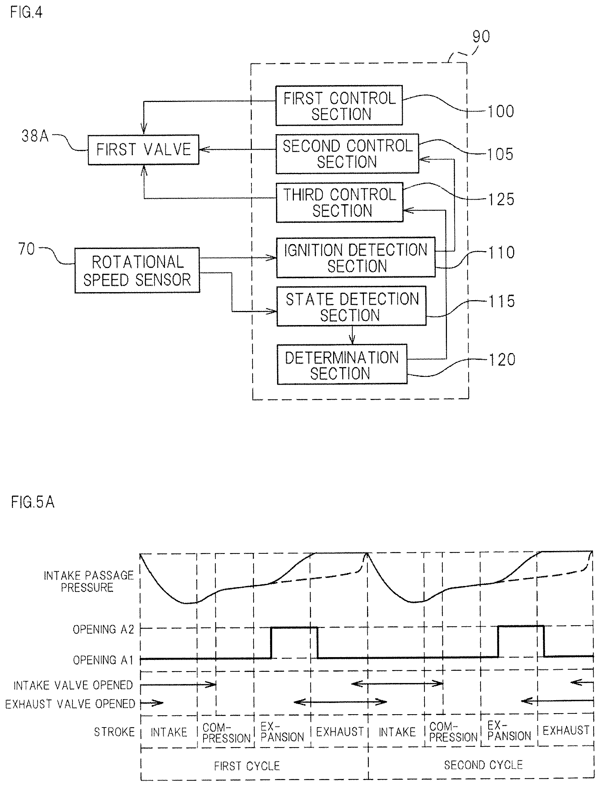

As illustrated in FIG. 4, the ECU 90 preferably further includes: a first control section 100 that keeps the opening of the first valve 38A at an opening equal to or smaller than a first opening; a second control section 105 that changes the opening of the first valve 38A to a second opening greater than the first opening; an ignition detection section 110 that detects fuel ignition; a state detection section 115; a determination section 120; and a third control section 125. The first, second and third control sections 100, 105 and 125 can distinguish among the intake, compression, expansion and exhaust strokes on the basis of a signal from the rotational speed sensor 70. Although the first, second and third control sections 100, 105 and 125 control the first valve 38A provided in the first bypass passage 36A in the present preferred embodiment, an object to be controlled by the first, second and third control sections 100, 105 and 125 is not limited to the first valve 38A. For example, the first, second and third control sections 100, 105 and 125 may control the throttle valve 54 or the second valve 38B. It is also contemplated that the first, second and third control sections 100, 105 and 125 may control two or all of the valves 38A, 38B and 54.

The second control section 105 can change the opening of the first valve 38A to the second opening greater than the first opening, keep the opening of the first valve 38A at the second opening, and change the opening of the first valve 38A from the second opening to the opening equal to or smaller than the first opening.

The ignition detection section 110 detects fuel ignition in a first cycle at startup of the engine 4. The ignition detection section 110 preferably detects fuel ignition in the expansion stroke of the first cycle. The ignition detection section 110 detects fuel ignition on the basis of a rotational speed of the engine 4 detected by the rotational speed sensor 70. For example, when the rotational speed of the engine 4 is equal to or higher than a given value, the ignition detection section 110 determines that the fuel is ignited, and when the rotational speed of the engine 4 is lower than the given value, the ignition detection section 110 determines that the fuel is not ignited.

The state detection section 115 detects a state of the engine 4. Usable parameters indicative of the state of the engine 4 include various parameters such as the rotational speed of the engine 4, for example. The state detection section 115 preferably detects the state of the engine 4 in the expansion stroke of a second cycle. The state detection section 115 detects the state of the engine 4 on the basis of the rotational speed of the engine 4 detected by the rotational speed sensor 70.

The determination section 120 determines whether or not the state of the engine 4 detected by the state detection section 115 is a given state. The determination section 120 determines whether or not the state of the engine 4 is the given state on the basis of whether or not the rotational speed of the engine 4 is equal to or higher than a given value, for example. When the rotational speed of the engine 4 is equal to or higher than the given value, the determination section 120 determines that the engine 4 is started up, and when the rotational speed of the engine 4 is lower than the given value, the determination section 120 determines that the engine 4 is not started up.

Upon determination by the determination section 120 that the state of the engine 4 is not the given state (i.e., upon determination that the engine 4 is not started up), the third control section 125 keeps the opening of the first valve 38A at the opening equal to or smaller than the first opening, and performs the first and second cycles again. However, upon determination by the determination section 120 that the state of the engine 4 is the given state (i.e., upon determination that the engine 4 is started up), the third control section 125 keeps the opening of the first valve 38A at an opening greater than the first opening (e.g., keeps the opening of the first valve 38A at the second opening or gradually increases the opening of the first valve 38A from the second opening) in a cycle subsequent to the second cycle. As a result, the engine 4, which has been started up, makes a smooth transition to an idling state.

Upon determination by the determination section 120 that the state of the engine 4 is not the given state (i.e., upon determination that the rotational speed of the engine 4 is lower than the given value due to misfiring, for example) in the cycle subsequent to the second cycle in which the engine 4 has been started up, the third control section 125 performs the first and second cycles again. However, upon determination by the determination section 120 that the state of the engine 4 is the given state (i.e., upon determination that the rotational speed of the engine 4 is kept at or above the given value) in the cycle subsequent to the second cycle in which the engine 4 has been started up, the third control section 125 keeps the opening of the first valve 38A at the opening greater than the first opening.

The ECU 90 preferably further includes a mixed percentage determining section 82 (see FIG. 2) that determines the percentage of ethanol mixed in the fuel. As mentioned above, the percentage of the mixed ethanol is estimated on the basis of the value detected by the 02 sensor 78 in the present preferred embodiment. The mixed percentage determining section 82 makes this estimation to determine the percentage of the mixed ethanol. Since a method for estimating the percentage of mixed ethanol on the basis of a value detected by an 02 sensor is well known, description thereof will be omitted. Note that when a sensor that detects an ethanol concentration in the fuel is provided, this sensor functions as the mixed percentage determining section 82.

The ECU 90 is connected with the above-described sensors so that a detection signal is transmitted to the ECU 90 from each sensor. Specifically, the ECU 90 is connected with the rotational speed sensor 70, the temperature sensor 72, the pressure sensor 74, the throttle position sensor 76, the 02 sensor 78 and the fuel sensor 80. When a sensor that detects an ethanol concentration in the fuel is provided, this sensor is also connected to the ECU 90.

The use of the valve device 56 having the above-described structure enables the amount of intake air and the amount of burnt gas to be controlled independently. Hereinafter, control by which the amount of intake air and the amount of burnt gas can be adjusted independently will be referred to as "independent control". The use of the valve device 56 also enables startup control of the engine 4. The use of the valve device 56 further enables control of the amount of intake air at startup of the engine 4, during cold idling (i.e., when the engine 4 is idling and the temperature thereof is lower than a given temperature), and during warm idling (i.e., when the engine 4 is idling and the temperature thereof is equal to or higher than the given temperature).

### Independent Control

First, the independent control of the engine 4 will be described. The independent control is performed to allow the engine 4 to operate efficiently at startup. The independent control is performed by the ECU 90.

In the engine 4 according to the present preferred embodiment, at startup an "overlap period" in which both of the intake valve 32 and the exhaust valve 42 are opened exists in a portion of the intake stroke and/or a portion of the exhaust stroke of a given cycle.

In the present preferred embodiment, as illustrated in FIG. 5A, the exhaust valve 42 (see FIG. 2) is opened immediately before the end of the expansion stroke of a given cycle (e.g., the first cycle). The exhaust valve 42 is always opened during the exhaust stroke of the given cycle. While the exhaust valve 42 is opened, exhaust gas inside the combustion chamber 25 is discharged to the exhaust passage 40. The exhaust valve 42 is opened until immediately after the start of the intake stroke of the cycle (e.g., the second cycle) subsequent to the given cycle, and is then closed.

Meanwhile, as illustrated in FIG. 5A, the intake valve 32 (see FIG. 2) is opened immediately before the end of the exhaust stroke of a given cycle (e.g., the first cycle). The intake valve 32 is always opened during the intake stroke of the cycle (e.g., the second cycle) subsequent to the given cycle. While the intake valve 32 is opened, air and fuel are introduced into the combustion chamber 25 through the intake passage 30. The intake valve 32 is opened until immediately after the start of the compression stroke of the cycle subsequent to the given cycle, and is then closed.

The independent control can be performed by using the first valve 38A and/or the second valve 38B. Hereinafter, the independent control performed by using the first valve 38A will be described. Each opening in FIGS. 5A to 5D, which will be described below, refers to the opening of the first valve 38A.

FIG. 5A is a time chart of first independent control which is one preferred embodiment of the present teaching. Note that in the following preferred embodiments, the first cycle refers to a given cycle unless otherwise specified. For example, the first cycle may be an initial cycle immediately after startup or may be a given cycle during idling or during low-load running. In the following description made with reference to the time charts, the throttle valve 54 and the second valve 38B are each maintained at a given opening, and the opening of the first valve 38A is controlled by the first, second and third control sections 100, 105 and 125. In the time charts, the intake pipe pressure indicated by the solid line is obtained when the opening of the first valve 38A is controlled, and the intake pipe pressure indicated by the dotted line is obtained when the opening of the first valve 38A is kept at an opening A1 without being controlled.

As illustrated in FIG. 5A, the first control section 100 keeps the opening of the first valve 38A at the opening A1 equal to or smaller than the first opening in the intake stroke of the first cycle. Thus, the intake pipe pressure is kept low in the intake stroke of the first cycle. Therefore, vaporization of the fuel in the intake passage 30 is promoted and the fuel is increased in concentration, thus facilitating fuel ignition in the first cycle. Note that the first opening is an opening which can serve as a limit value for reduction of the intake pipe pressure. The first opening may be set uniquely in advance on the basis of a simulation, an experiment or the like performed in accordance with specifications of the engine 4, for example. The first opening is not limited to any particular value, but may be set at any appropriate value. The first opening may be zero, for example. The same goes for each of the following preferred embodiments of the present teaching.

The second control section 105 changes the opening of the first valve 38A when the intake valve 32 is closed. Specifically, the second control section 105 changes the opening of the first valve 38A to an opening A2 (second opening) greater than the first opening in the expansion stroke of the first cycle, keeps the opening of the first valve 38A at the opening A2 until immediately after the start of the exhaust stroke of the first stroke, and then returns the opening of the first valve 38A to the opening A1 in the exhaust stroke of the first stroke. Hence, the amount of air sucked into the intake passage 30 is increased, thus increasing the intake pipe pressure and inhibiting burnt gas from flowing backward to inside of the intake passage 30. In other words, the amount of burnt gas can be controlled. Note that the opening of the first valve 38A may be gradually increased after having been changed to the opening A2.

Since the second control section 105 returns the opening of the first valve 38A to the opening A1 before the end of the exhaust stroke of the first cycle, the intake pipe pressure is kept low in the intake stroke of the second cycle. Therefore, vaporization of the fuel is promoted and the fuel is increased in concentration, thus facilitating fuel ignition in the second cycle. In the second cycle, the first and second control sections 100 and 105 control the opening of the first valve 38A similarly to the first cycle, so that the amount of burnt gas can be controlled independently from the amount of intake air. As a result, fuel ignition is facilitated in a third cycle subsequent to the second cycle.

Note that in the first independent control, the opening of the first valve 38A may be changed to the second opening A2 in any one of the compression, expansion and exhaust strokes of the first cycle, and the opening of the first valve 38A may be returned to the opening A1 equal to or smaller than the first opening before the end of the exhaust stroke of the first cycle. With this control, advantages similar to those described above are achieved.

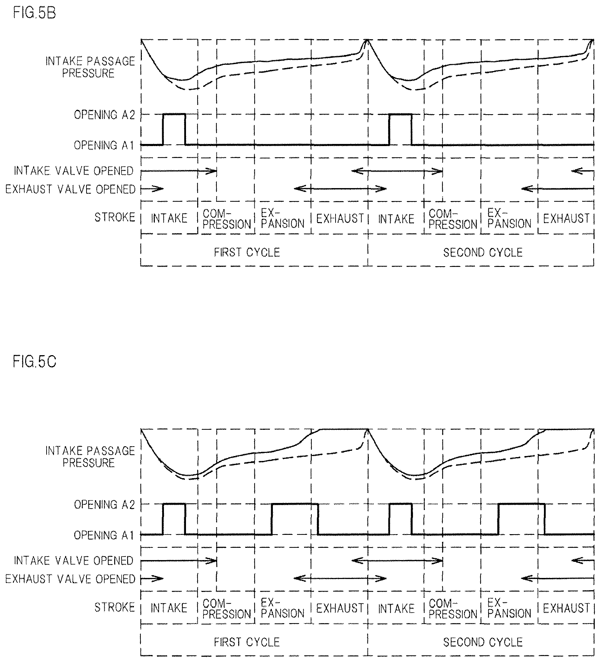

FIG. 5B is a time chart of second independent control which is another preferred embodiment of the present teaching.

As illustrated in FIG. 5B, the first control section 100 keeps the opening of the first valve 38A at the opening A1 in a portion of the intake stroke of the first cycle. Thus, the intake pipe pressure is kept low in the intake stroke of the first cycle. Therefore, vaporization of the fuel in the intake passage 30 is promoted and the fuel is increased in concentration, thus facilitating fuel ignition in the first cycle.

Then, the second control section 105 changes the opening of the first valve 38A when the intake valve 32 is opened. Specifically, the second control section 105 changes the opening of the first valve 38A to the opening A2 in the intake stroke of the first cycle, and then returns the opening of the first valve 38A to the opening A1 in the intake stroke. Thus, the amount of air sucked into the intake passage 30 can be increased.

Since the second control section 105 returns the opening of the first valve 38A to the opening A1 in the intake stroke of the first cycle, the intake pipe pressure can be kept low until the intake stroke of the second cycle. Thus, in the intake stroke of the second cycle, the amount of backflow of burnt gas is increased, and pumping loss can be reduced. In the second cycle, the first and second control sections 100 and 105 control the opening of the first valve 38A similarly to the first cycle, so that the amount of intake air can be controlled. As a result, the amount of intake air can be increased, and in addition, pumping loss can be reduced.

Note that in the second independent control, the opening of the first valve 38A may be changed to the second opening A2 in the intake stroke of the first cycle, and the opening of the first valve 38A may be returned to the opening A1 equal to or smaller than the first opening before the end of the compression stroke of the first cycle. With this control, advantages similar to those described above are achieved.

FIG. 5C is a time chart of third independent control which is still another preferred embodiment of the present teaching.

As illustrated in FIG. 5C, the first control section 100 keeps the opening of the first valve 38A at the opening A1 in a portion of the intake stroke of the first cycle. Thus, the intake pipe pressure is kept low in the intake stroke of the first cycle. Therefore, vaporization of the fuel in the intake passage 30 is promoted and the fuel is increased in concentration, thus facilitating fuel ignition in the first cycle.

Then, the second control section 105 changes the opening of the first valve 38A when the intake valve 32 is opened. Specifically, the second control section 105 changes the opening of the first valve 38A to the opening A2 in the intake stroke of the first cycle, and then returns the opening of the first valve 38A to the opening A1 in the intake stroke. Thus, the amount of air sucked into the intake passage 30 can be increased.

Then, the second control section 105 changes the opening of the first valve 38A when the intake valve 32 is closed. Specifically, the second control section 105 changes the opening of the first valve 38A to the opening A2 in the expansion stroke of the first cycle, keeps the opening of the first valve 38A at the opening A2 until immediately after the start of the exhaust stroke of the first stroke, and then returns the opening of the first valve 38A to the opening A1 in the exhaust stroke of the first cycle. As a result, the amount of air sucked into the intake passage 30 is increased, thus increasing the intake pipe pressure and inhibiting burnt gas from flowing backward to the inside of the intake passage 30.

Since the second control section 105 returns the opening of the first valve 38A to the opening A1 before the end of the exhaust stroke of the first cycle, the intake pipe pressure is kept low in the intake stroke of the second cycle. Thus, fuel ignition is facilitated in the second cycle. In the second cycle, the first and second control sections 100 and 105 control the opening of the first valve 38A similarly to the first cycle, so that the amount of intake air and the amount of burnt gas can be controlled independently. As a result, an increase in the amount of intake air and enhancement of fuel ignition performance are achieved.

Note that in the third independent control, the opening of the first valve 38A may be changed to the second opening A2 in the intake stroke of the first cycle, and then the opening of the first valve 38A may be returned to the opening A1 equal to or smaller than the first opening before the end of the compression stroke of the first cycle. Subsequently, the opening of the first valve 38A may be increased to the opening greater than the first opening in any one of the compression, expansion and exhaust strokes of the first cycle, and then the opening of the first valve 38A may be returned to the opening A1 equal to or smaller than the first opening before the end of the exhaust stroke of the first cycle. With this control, advantages similar to those described above are achieved.

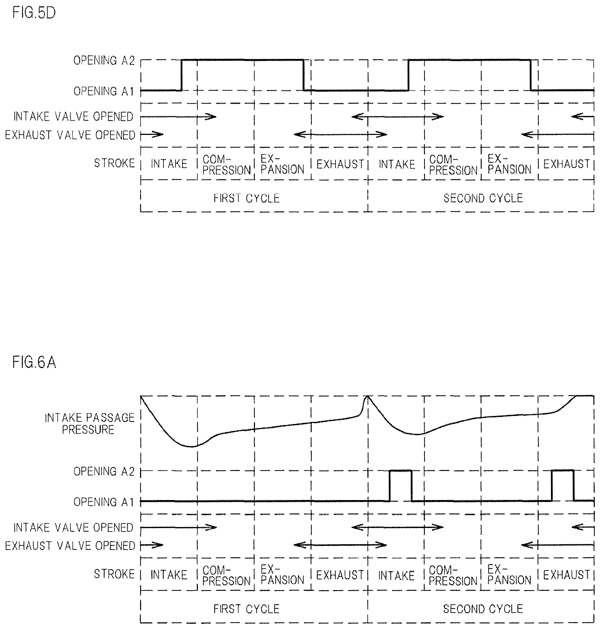

FIG. 5D is a time chart of fourth independent control which is yet another preferred embodiment of the present teaching.

As illustrated in FIG. 5D, the first control section 100 keeps the opening of the first valve 38A at the opening A1 in a portion of the intake stroke of the first cycle. Thus, the intake pipe pressure is kept low in the intake stroke of the first cycle. Therefore, vaporization of the fuel in the intake passage 30 is promoted and the fuel is increased in concentration, thus facilitating fuel ignition in the first cycle.

Then, the second control section 105 changes the opening of the first valve 38A when the intake valve 32 is opened, and further changes the opening of the first valve 38A when the intake valve 32 is closed. Specifically, the second control section 105 changes the opening of the first valve 38A to the opening A2 in the intake stroke of the first cycle, and then returns the opening of the first valve 38A to the opening A1 in the expansion stroke of the first cycle. Thus, the amount of air sucked into the intake passage 30 can be increased, and backflow of burnt gas can be inhibited. In the second cycle, the first and second control sections 100 and 105 control the opening of the first valve 38A similarly to the first cycle, so that the amount of intake air and the amount of burnt gas can be controlled independently. As a result, an increase in the amount of intake air and enhancement of fuel ignition performance are achieved.

### Startup Control

Next, the startup control of the engine 4 will be described. The startup control is performed to start up the engine 4 successfully. During wintertime or in cold climate areas, for example, it is difficult for the engine 4 to start up. The following startup control is particularly suitable during wintertime or in cold climate areas, for example. When a fuel containing alcohol such as ethanol is used, it is more difficult for the engine 4 to start up than when gasoline is used. The following startup control is particularly suitable when an alcohol-containing fuel is used.

The startup control is performed by the ECU 90. After turning ON a main switch (not illustrated), a rider causes a kick shaft (not illustrated) to rotate or operates a self-starter switch (not illustrated), and thus a self-starter motor is rotated, which then rotates the crankshaft 23 of the engine 4 forcibly. The ECU 90 may start the startup control upon turning ON of the main switch, for example. Alternatively, the ECU 90 may start the startup control upon detection of rotation of the kick shaft, operation of the self-starter switch, rotation of the self-starter motor or rotation of the crankshaft 23.

The startup control can be performed by using the first valve 38A and/or the second valve 38B. Hereinafter, the startup control performed by using the first valve 38A will be described. Each opening in FIGS. 6A to 6D, which will be described below, refers to the opening of the first valve 38A.

FIG. 6A is a time chart of first startup control which is one preferred embodiment of the present teaching.

As illustrated in FIG. 6A, the first control section 100 keeps the opening of the first valve 38A at the opening A1 from the intake stroke of the first cycle to the exhaust stroke of the first cycle. Thus, the intake pipe pressure is kept low in the intake stroke of the first cycle. Therefore, vaporization of the fuel in the intake passage 30 is promoted and the fuel is increased in concentration, thus facilitating fuel ignition in the first cycle.

Then, in the second cycle, the second control section 105 changes the opening of the first valve 38A when the intake valve 32 is opened. Specifically, the second control section 105 changes the opening of the first valve 38A to the opening A2 in the intake stroke of the second cycle, keeps the opening of the first valve 38A at the opening A2 in the intake stroke, and then returns the opening of the first valve 38A to the opening A1 in the intake stroke. Hence, the amount of air sucked into the intake passage 30 can be increased.

Then, in the second cycle, the second control section 105 further changes the opening of the first valve 38A when the intake valve 32 is closed. Specifically, the second control section 105 changes the opening of the first valve 38A to the opening A2 in the exhaust stroke of the second cycle, keeps the opening of the first valve 38A at the opening A2 in the exhaust stroke, and then returns the opening of the first valve 38A to the opening A1 in the exhaust stroke. Hence, the amount of air sucked into the intake passage 30 is increased, thus increasing the intake pipe pressure and inhibiting burnt gas from flowing backward to the inside of the intake passage 30. As a result, fuel ignition is facilitated in the third cycle subsequent to the second cycle.

Note that in the first startup control, the opening of the first valve 38A may be changed to the second opening A2 in any one of the compression, expansion and exhaust strokes of the second cycle, and the opening of the first valve 38A may be returned to the opening A1 equal to or smaller than the first opening before the end of the exhaust stroke of the second cycle. With this control, advantages similar to those described above are achieved.

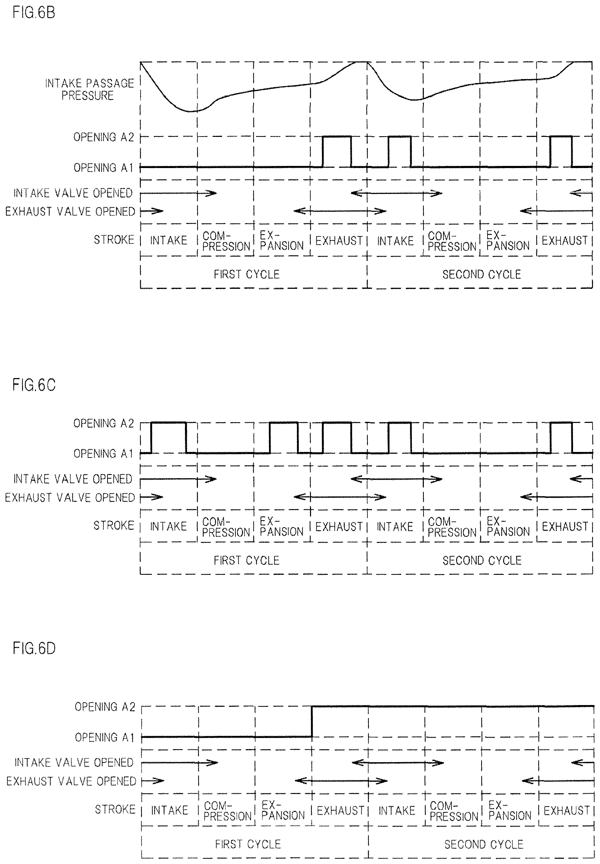

FIG. 6B is a time chart of second startup control which is another preferred embodiment of the present teaching.

As illustrated in FIG. 6B, the first control section 100 keeps the opening of the first valve 38A at the opening A1 from the intake stroke of the first cycle to the expansion stroke of the first cycle. Thus, the intake pipe pressure is kept low in the intake stroke of the first cycle. Therefore, vaporization of the fuel in the intake passage 30 is promoted and the fuel is increased in concentration, thus facilitating fuel ignition in the first cycle.

Then, in the first cycle, the second control section 105 changes the opening of the first valve 38A when the intake valve 32 is closed. Specifically, the second control section 105 changes the opening of the first valve 38A to the opening A2 in the exhaust stroke of the first cycle, keeps the opening of the first valve 38A at the opening A2 in the exhaust stroke, and then returns the opening of the first valve 38A to the opening A1 in the exhaust stroke. Hence, the amount of air sucked into the intake passage 30 is increased, thus increasing the intake pipe pressure and inhibiting burnt gas from flowing backward to the inside of the intake passage 30. As a result, fuel ignition is facilitated in the second cycle. Note that control performed in the second cycle of the second startup control is similar to the control performed in the second cycle of the first startup control described above, and therefore, advantages similar to those described above are achieved.

FIG. 6C is a time chart of third startup control which is still another preferred embodiment of the present teaching.

As illustrated in FIG. 6C, the first control section 100 keeps the opening of the first valve 38A at the opening A1 at least in a portion of the intake stroke of the first cycle. Thus, the intake pipe pressure is kept low in the intake stroke of the first cycle. Therefore, vaporization of the fuel in the intake passage 30 is promoted and the fuel is increased in concentration, thus facilitating fuel ignition in the first cycle.

The second control section 105 changes the opening of the first valve 38A to the opening A2 in each of the intake, expansion and exhaust strokes of the first cycle, and then returns the opening of the first valve 38A to the opening A1. Thus, the amount of intake air and the amount of burnt gas can be controlled independently. Note that control performed in the second cycle of the third startup control is similar to the control performed in the second cycle of the first startup control described above, and therefore, advantages similar to those described above are achieved.

FIG. 6D is a time chart of fourth startup control which is yet another preferred embodiment of the present teaching.

As illustrated in FIG. 6D, the first control section 100 keeps the opening of the first valve 38A at the opening A1 from the intake stroke of the first cycle to the expansion stroke of the first cycle. Thus, the intake pipe pressure is kept low in the intake stroke of the first cycle. Therefore, vaporization of the fuel in the intake passage 30 is promoted and the fuel is increased in concentration, thus facilitating fuel ignition in the first cycle.

Then, the second control section 105 changes the opening of the first valve 38A to the opening A2 and keeps the opening of the first valve 38A at the opening A2 in the exhaust stroke of the first stroke. Hence, in the intake stroke of the second cycle, backflow of burnt gas is prevented and the amount of intake air is increased, thus enabling a smooth transition to an idling state.

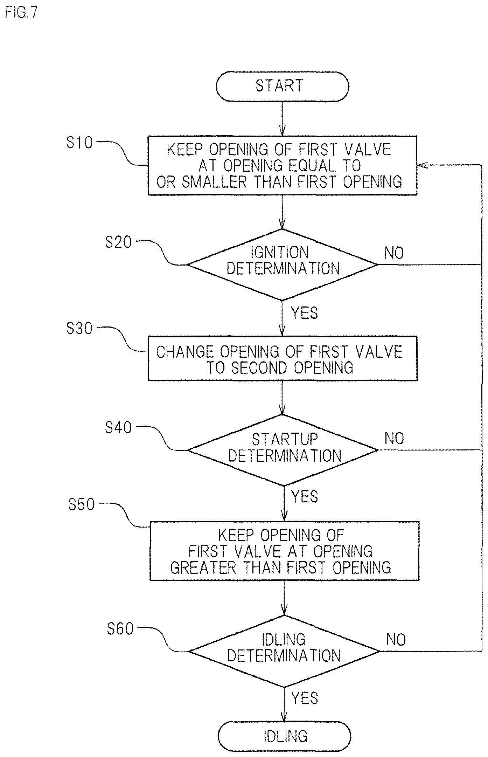

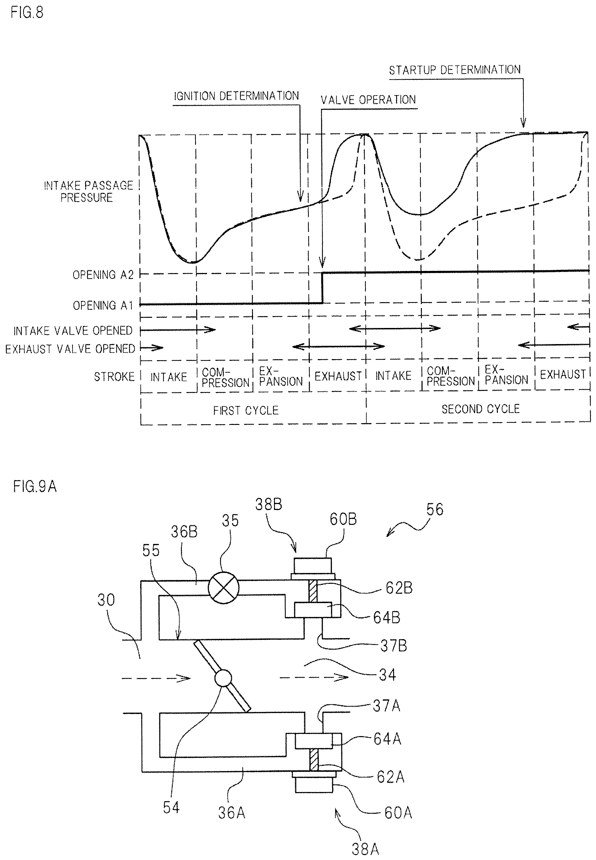

The above-described startup control is performed irrespective of the state of the engine 4. Alternatively, the state of the engine 4 may be determined, and the opening(s) of the first valve 38A and/or the second valve 38B may be controlled on the basis of the determination result. Next, startup control including determining whether or not the state of the engine 4 is a given state will be described. The following description is directed to the startup control performed by using the first valve 38A. FIG. 7 is a flow chart of the startup control. FIG. 8 is a time chart of the startup control including determination steps. In FIG. 8, the intake pipe pressure indicated by the solid line is obtained when the opening of the first valve 38A is controlled, and the intake pipe pressure indicated by the dotted line is obtained when the opening of the first valve 38A is not controlled.

First, in Step S10, the first control section 100 keeps the opening of the first valve 38A at the opening A1 at least in a portion of the intake stroke of the first cycle. As illustrated in FIG. 8, in this example, the first control section 100 keeps the opening of the first valve 38A at the opening A1 in the whole intake stroke of the first cycle. In this step, the first control section 100 supplies a driving signal to the solenoid 60A to move the valve body 64A attached to the tip of the shaft 62A, so that the first bypass passage 36A is closed. Upon execution of this step, the intake pipe pressure of a downstream region of the intake passage 30 is kept low. Therefore, vaporization of the fuel in the intake passage 30 is promoted and the fuel is increased in concentration, thus facilitating fuel ignition in the first cycle. Hereinafter, the state where the opening of the first valve 38A is kept at the opening A1 refers to the closed state in which the first bypass passage 36A is closed.

Upon execution of Step S10, the control procedure then proceeds to Step S20 in which whether or not the fuel is ignited is determined (fuel ignition determination). In this step, the ignition detection section 110 determines whether or not the fuel is ignited on the basis of the rotational speed of the engine 4 detected by the rotational speed sensor 70 in the expansion stroke of the first cycle. For example, when the rotational speed is equal to or higher than a given rotational speed, the ignition detection section 110 determines that the fuel is ignited. Alternatively, for example, when the amount of increase in the rotational speed per unit time is equal to or higher than a given value, the ignition detection section 110 determines that the fuel is ignited. Upon determination by the ignition detection section 110 that the fuel is not ignited, the control procedure returns to Step S10 in which the opening of the first valve 38A is kept at the opening A1.

Conversely, upon determination by the ignition detection section 110 that the fuel is ignited, the control procedure then proceeds to Step S30 in which the second control section 105 changes the opening of the first valve 38A to the opening A2 before the end of the intake stroke of the second cycle. As illustrated in FIG. 8, in this example, the second control section 105 changes the opening of the first valve 38A to the opening A2 in the exhaust stroke of the first cycle. In this step, the second control section 105 supplies a driving signal to the solenoid 60A to move the valve body 64A, so that the first bypass passage 36A is opened. Then, the second control section 105 keeps the opening of the first valve 38A at an opening greater than the first opening (i.e., at the second opening A2 in this example) as necessary. Upon execution of this step, the amount of air sucked to the downstream region of the intake passage 30 is increased and the intake pipe pressure thereof is increased, thus making it possible to inhibit backflow of burnt gas. Therefore, fuel ignition is facilitated in the second cycle. In other words, "misfiring" is unlikely to occur in the second cycle. Hereinafter, the state where the opening of the first valve 38A is kept at the opening A2 refers to the open state in which the first bypass passage 36A is opened.

Upon execution of Step S30, the control procedure then proceeds to Step S40 in which whether or not the engine 4 is started up is determined (startup determination). In this step, the state detection section 115 detects the state of the engine 4 on the basis of the rotational speed of the engine 4 detected by the rotational speed sensor 70 in the expansion stroke of the second cycle. The determination section 120 determines whether or not the engine 4 is started up on the basis of the state of the engine 4 detected by the state detection section 115. For example, when the state of the engine 4 in which the rotational speed thereof is equal to or higher than a given value is detected by the state detection section 115, the determination section 120 determines that the engine 4 is started up. Upon determination by the determination section 120 that the engine 4 is not started up because the rotational speed of the engine 4 is lower than the given value, the control procedure returns to Step S10 in which the third control section 125 keeps the opening of the first valve 38A at the opening A1.

Conversely, upon determination by the determination section 120 that the engine 4 is started up because the rotational speed of the engine 4 is equal to or higher than the given value, the control procedure then proceeds to Step S50 in which the third control section 125 keeps the opening of the first valve 38A at an opening greater than the first opening. As illustrated in FIG. 8, in this example, the third control section 125 keeps the opening of the first valve 38A at the opening A2. In this step, the third control section 125 supplies a driving signal to the solenoid 60A to move the valve body 64A so that the first bypass passage 36A is opened, and maintains the open state of the first bypass passage 36A. Upon execution of this step, the amount of air sucked to the downstream region of the intake passage 30 is increased, thus enabling a smooth transition to the idling state.

Upon execution of Step S50, the control procedure then proceeds to Step S60 in which whether or not the engine 4 is idling is determined (idling determination). In this step, the state detection section 115 detects the state of the engine 4 on the basis of the rotational speed of the engine 4 detected by the rotational speed sensor 70 in the expansion stroke of the cycle subsequent to the second cycle. The determination section 120 determines whether or not the engine 4 is idling on the basis of the state of the engine 4 detected by the state detection section 115. For example, when the state of the engine 4 in which the rotational speed thereof is equal to or higher than the given value is detected by the state detection section 115, the determination section 120 determines that the engine 4 is idling. Upon determination by the determination section 120 that the engine 4 is not idling because the rotational speed of the engine 4 is lower than the given value, the control procedure returns to Step S10 in which the third control section 125 keeps the opening of the first valve 38A at the opening A1.

Conversely, upon determination by the determination section 120 that the engine 4 is idling because the rotational speed of the engine 4 is equal to or higher than the given value, the third control section 125 keeps the opening of the first valve 38A at the opening greater than the first opening to maintain the idling state of the engine 4.

Whether or not the amount of intake air flowing through the intake passage 30 should be controlled with the use of the valve device 56 having the above-described structure may be decided on the basis of the temperature of the engine 4 and ethanol concentration. FIG. 14 is a graph illustrating a relationship between the engine temperature and ethanol concentration. In FIG. 14, an intake throttle startup region represents a region where the amount of intake air flowing through the intake passage 30 is controlled with the use of the valve device 56, while a normal startup region represents a region where the amount of intake air flowing through the intake passage 30 is not controlled with the use of the valve device 56.

Note that even when a value indicating the relationship between the engine temperature and ethanol concentration is in the intake throttle startup region, the ECU 90 suspends the control of the amount of intake air flowing through the intake passage 30, if the throttle position sensor 76 has detected that the throttle valve 54 is opened or the pressure sensor 74 has detected that the intake pipe pressure in the intake passage 30 is not lower than a given pressure. When the control is suspended, the rider (user) is preferably notified of the suspension. Notification of the suspension can be provided to the rider visually through an indicator panel (not illustrated), for example.

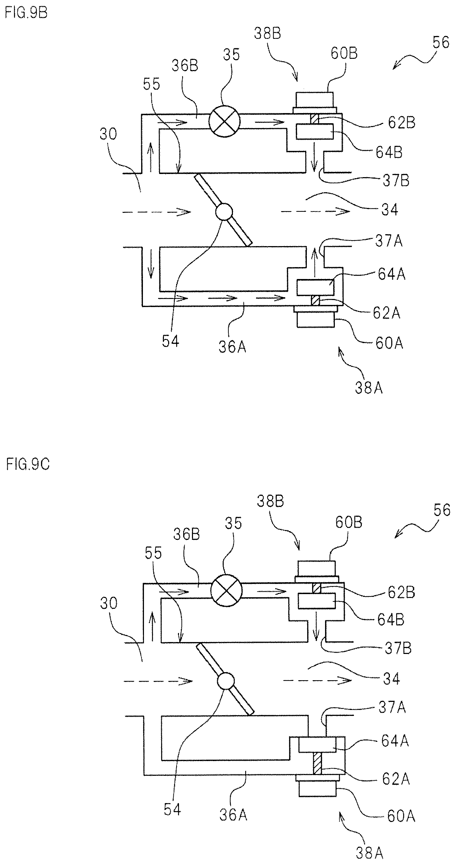

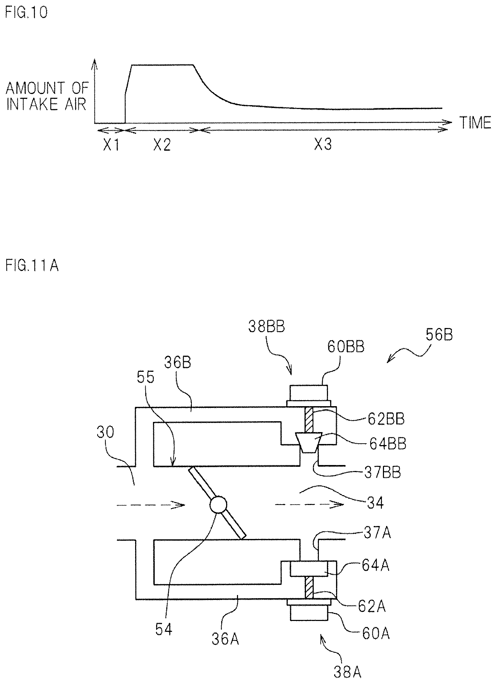

Next, functions of the valve device 56 will be described with reference to FIGS. 9A to 9C and FIG. 10. FIG. 9A is a schematic diagram illustrating a state of the valve device 56 before startup of the engine 4. FIG. 9B is a schematic diagram illustrating a state of the valve device 56 during cold idling. FIG. 9C is a schematic diagram illustrating a state of the valve device 56 during warm idling. And FIG. 10 is a graph illustrating time-varying changes in the amount of intake air before and after engine startup.

As illustrated in FIG. 9A, the first and second bypass passages 36A and 36B are both closed by the valve device 56 before startup of the engine 4 (during cranking). Specifically, no power is supplied to the solenoid 60A while power is supplied to the solenoid 60B, and therefore, the first and second valves 38A and 38B are both closed. In this case, the first passage port 37A of the first bypass passage 36A is closed by the valve body 64A, and the second passage port 37B of the second bypass passage 36B is closed by the valve body 64B. Hence, as illustrated in FIG. 10, the amount of intake air can be reduced during a period X1 before startup of the engine 4. Note that even when the first and second passage ports 37A and 37B are closed, a slight amount of air is allowed to flow through the main passage 34. As a result, a slight amount of intake air can be ensured in the intake passage 30 as a whole.

As illustrated in FIG. 9B, the first and second bypass passages 36A and 36B are both opened by the valve device 56 when the engine 4 is idling and the temperature thereof is lower than the given temperature (i.e., during cold idling). Specifically, upon determination by the determination section 120 that the engine 4 is idling and when the temperature of the engine 4 detected by the temperature sensor 72 is lower than the given temperature, power is supplied to the solenoid 60A while no power is supplied to the solenoid 60B. Thus, the first and second valves 38A and 38B are both opened. In this case, the valve bodies 64A and 64B each move in the direction away from the main passage 34, so that the first and second bypass passages 36A and 36B are opened. Hence, as illustrated in FIG. 10, the amount of intake air can be increased during a period X2 corresponding to cold idling of the engine 4.

As illustrated in FIG. 9C, the first bypass passage 36A is closed and the second bypass passage 36B is opened by the valve device 56 when the engine 4 is idling and the temperature thereof is equal to or higher than the given temperature (i.e., during warm idling). Specifically, upon determination by the determination section 120 that the engine 4 is idling and when the temperature of the engine 4 detected by the temperature sensor 72 is equal to or higher than the given temperature, no power is supplied to the solenoid 60B. Thus, the second valve 38B is opened. In this case, the valve body 64B moves in the direction away from the main passage 34, so that the second bypass passage 36B is opened. Since no power is supplied to the solenoid 60A, the first valve 38A is closed. In this case, the first passage port 37A of the first bypass passage 36A is closed by the valve body 64A. Hence, as illustrated in FIG. 10, the amount of intake air can be kept at an intermediate level during a period X3 corresponding to warm idling of the engine 4. Note that the "amount of intake air at an intermediate level" refers to the amount of intake air per unit time which is larger than the amount of intake air per unit time before startup of the engine 4 but smaller than the amount of intake air per unit time during cold idling.

Note that before startup of the engine 4 (i.e., during cranking), the first passage port 37A of the first bypass passage 36A and/or the second passage port 37B of the second bypass passage 36B may be opened intermittently so as to allow a very small amount of air to flow through the first bypass passage 36A and/or the second bypass passage 36B. However, the amount of air flowing through the first bypass passage 36A and/or the second bypass passage 36B in that case is smaller than the amount of air flowing therethrough during warm idling. The first passage port 37A and/or the second passage port 37B may be opened intermittently by appropriately adjusting a duty ratio described later.

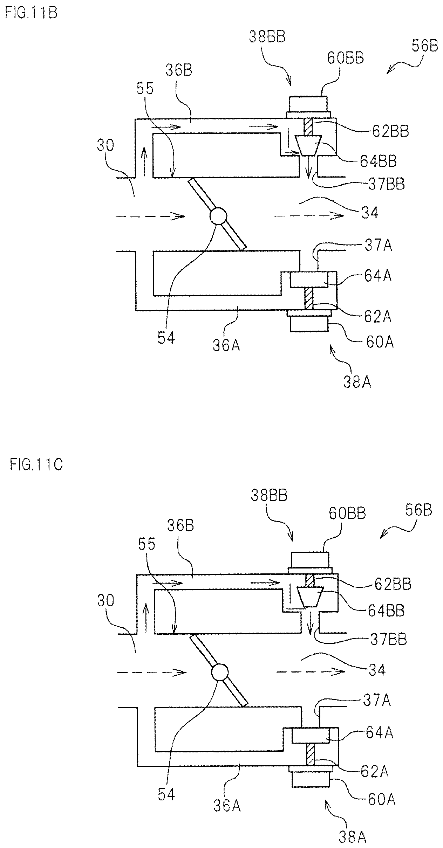

Although the first and second valves 38A and 38B of the valve device 56 each include a solenoid valve, one of the first and second valves 38A and 38B may alternatively be a valve including a stepping motor. FIGS. 11A to 11C illustrate a valve device 56B according to an alternative embodiment of the present teaching. As illustrated in FIGS. 11A to 11C, a second valve 38BB of the valve device 56B preferably includes a valve that includes: a stepping motor 60BB; a shaft 62BB driven by the stepping motor 60BB so as to be moved in a vertical direction in FIGS. 11A to 11C; and a valve body 64BB attached to a tip of the shaft 62BB. Upon vertical movement of the shaft 62BB by the stepping motor 60BB, the valve body 64BB attached to the tip of the shaft 62BB also moves in the vertical direction. Thus, the valve body 64BB opens or closes a second passage port 37BB of the second bypass passage 36B, and the flow passage cross-sectional area of the second bypass passage 36B is changed in accordance with the vertical position of the valve body 64BB. As a result, the amount of air flowing through the second bypass passage 36B is adjusted. Since the position of the valve body 64BB is adjustable, the amount of air flowing through the second bypass passage 36B can be freely adjusted. Note that FIG. 11A illustrates the valve device 56B in which the valve body 64BB is fully closed, FIG. 11B illustrates the valve device 56B in which the valve body 64BB is opened half way, and FIG. 11C illustrates the valve device 56B in which the valve body 64BB is fully opened.

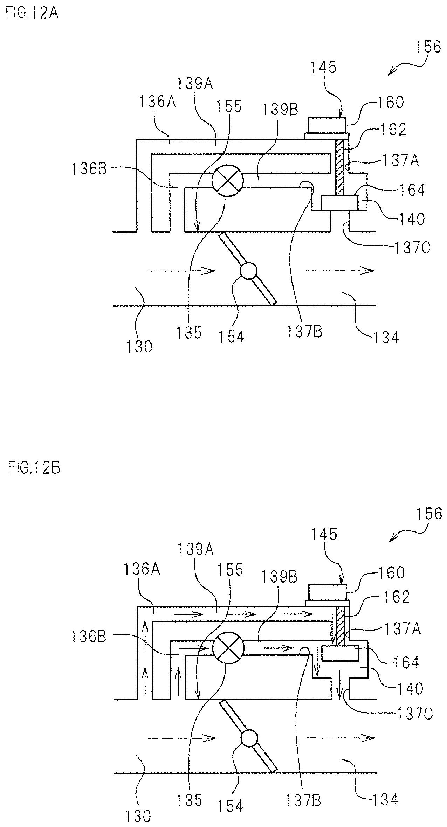

In the intake passage 30 of the engine 4 described above, the first and second bypass passages 36A and 36B are mutually independent bypass passages, but the present teaching is not limited to this structure. Hereinafter, a structure of an intake passage according to a preferred variation (first variation) of the present teaching will be described with reference to FIGS. 12A to 12C.

As illustrated in FIG. 12A, an intake passage 130 according to the first variation preferably includes: a main passage 134 in which a throttle valve 154 serving as a main valve is contained; a first bypass passage 136A through which regions of the main passage 134 located upstream and downstream of the throttle valve 154 are communicated with each other; and a second bypass passage 136B through which the regions of the main passage 134 located upstream and downstream of the throttle valve 154 are communicated with each other. In downstream regions of the first and second bypass passages 136A and 136B, a portion of the first bypass passage 136A and a portion of the second bypass passage 136B constitute a common passage 140 and are thus integral with each other. Although not illustrated in FIG. 12A, the throttle valve 154 is provided with the throttle position sensor 76 (see FIG. 2) that detects an opening of the throttle valve 154. The intake passage 130 preferably further includes a valve device 156 capable of opening and closing the first and second bypass passages 136A and 136B. Note that in this preferred variation, the first and second bypass passages 136A and 136B and a throttle body 155 that constitutes the main passage 134 are separate components. Alternatively, the throttle body 155 may be integral with one or both of the first and second bypass passages 136A and 136B.

The first bypass passage 136A preferably includes a first independent passage 139A continuous with the common passage 140. A first passage port 137A is provided between the first independent passage 139A and the common passage 140. The second bypass passage 136B preferably includes: a second independent passage 139B continuous with the common passage 140; and a flow restrictor 135. A second passage port 137B is provided between the second independent passage 139B and the common passage 140. A third passage port 137C is provided between the common passage 140 and the main passage 134. Note that the flow restrictor 135 does not necessarily have to be provided in the second independent passage 139B, but may alternatively be provided in the first independent passage 139A or both of the first and second independent passages 139A and 139B.

The valve device 156 preferably includes a common valve 145 capable of opening and closing the first passage port 137A and the third passage port 137C. The amount of air flowing through the first and second bypass passages 136A and 136B can be controlled by adjusting an opening of the common valve 145 to change the flow passage cross-sectional area. The common valve 145 preferably includes a solenoid valve that includes: a solenoid 160; a shaft 162 driven by the solenoid 160 so as to be moved in a vertical direction in FIGS. 12A to 12C; and a valve body 164 attached to a tip of the shaft 162.

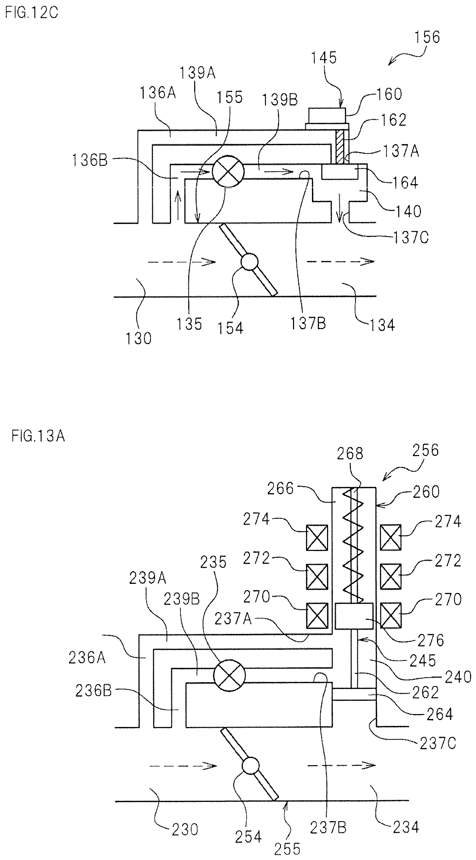

In the common valve 145, the direction of movement of the shaft 162 changes in response to whether or not power is supplied to the solenoid 160. Upon movement of the shaft 162 in a direction away from the main passage 134 (i.e., an upward direction in FIGS. 12A to 12C), the valve body 164 also moves in the same direction to close the first passage port 137A and open the third passage port 137C (see FIG. 12C). Conversely, upon movement of the shaft 162 in a direction toward the main passage 134 (i.e., a downward direction in FIGS. 12A to 12C) by the solenoid 160, the valve body 164 also moves in the same direction to close the third passage port 137C (see FIG. 12A). In the common valve 145, a ratio (i.e., a duty ratio) between a time period during which the first passage port 137A is closed and a time period during which the third passage port 137C is closed is appropriately adjusted, thus making it possible to intermittently open the first and second bypass passages 136A and 136B and to freely adjust the amount of air flowing from the third passage port 137C to the main passage 134 (see FIG. 12B).

Note that in this preferred variation, the third passage port 137C is closed when no power is supplied to the solenoid 160. Alternatively, the third passage port 137C may be closed when power is supplied to the solenoid 160. The common passage 140 and the common valve 145 may alternatively be provided in upstream regions of the first and second bypass passages 136A and 136B. Flow rates of air flowing through the first and second independent passages 139A and 139B per unit time are not limited to any particular flow rates. However, when the flow rates are different from each other, the amount of air flowing through the intake passage 130 can be extensively adjusted.

Next, functions of the valve device 156 according to this preferred variation will be described with reference to FIG. 10 and FIGS. 12A to 12C. FIG. 12A is a schematic diagram illustrating a state of the valve device 156 before startup of the engine 4. FIG. 12B is a schematic diagram illustrating a state of the valve device 156 during cold idling. And FIG. 12C is a schematic diagram illustrating a state of the valve device 156 during warm idling.

As illustrated in FIG. 12A, the third passage port 137C is closed by the valve device 156 before startup of the engine 4 (during cranking). Specifically, no power is supplied to the solenoid 160, and therefore, the common valve 145 is closed. In this case, the third passage port 137C is closed by the valve body 164, so that no air flows to the main passage 134 via the first and second bypass passages 136A and 136B. Hence, as illustrated in FIG. 10, the amount of intake air is kept low during the period X1 before startup of the engine 4.

As illustrated in FIG. 12B, the first passage port 137A and the third passage port 137C are each opened and closed repeatedly by the valve device 156 when the engine 4 is idling and the temperature thereof is lower than the given temperature (i.e., during cold idling). Specifically, upon determination by the determination section 120 that the engine 4 is idling and when the temperature of the engine 4 detected by the temperature sensor 72 is lower than the given temperature, power is supplied to the solenoid 160 so that a preset duty ratio is obtained. Thus, the common valve 145 is opened and closed repeatedly. In this case, movement of the valve body 164 in the direction away from the main passage 134 and movement of the valve body 164 in the direction toward the main passage 134 are repeated in an alternating manner, so that closing of the first passage port 137A and closing of the third passage port 137C are repeated in an alternating manner. Hence, as illustrated in FIG. 10, the amount of intake air can be increased during the period X2 corresponding to cold idling of the engine 4 because air can flow to the main passage 134 via the first and second bypass passages 136A and 136B.

As illustrated in FIG. 12C, the first passage port 137A is closed and the second and third passage ports 137B and 137C are opened by the valve device 156 when the engine 4 is idling and the temperature thereof is equal to or higher than the given temperature (i.e., during warm idling). Specifically, upon determination by the determination section 120 that the engine 4 is idling and when the temperature of the engine 4 detected by the temperature sensor 72 is equal to or higher than the given temperature, power is supplied to the solenoid 160. Thus, the valve body 164 moves in the direction away from the main passage 134 to open the second and third passage ports 137B and 137C and close the first passage port 137A. Hence, as illustrated in FIG. 10, the amount of intake air can be kept at an intermediate level during the period X3 corresponding to warm idling of the engine 4 because air can flow to the main passage 134 via the second bypass passage 136B.

Next, a structure of an intake passage according to another preferred variation (second variation) of the present teaching will be described with reference to FIGS. 13A to 13C.

As illustrated in FIG. 13A, an intake passage 230 according to the second variation preferably includes: a main passage 234 in which a throttle valve 254 is contained; a first bypass passage 236A through which regions of the main passage 234 located upstream and downstream of the throttle valve 254 are communicated with each other; and a second bypass passage 236B through which the regions of the main passage 234 located upstream and downstream of the throttle valve 254 are communicated with each other. In downstream regions of the first and second bypass passages 236A and 236B, a portion of the first bypass passage 236A and a portion of the second bypass passage 236B constitute a common passage 240 and are thus integral with each other. Note that in this preferred variation, the first and second bypass passages 236A and 236B and a throttle body 255 that constitutes the main passage 234 are separate components. Alternatively, the throttle body 255 may be integral with one or both of the first and second bypass passages 236A and 236B.

The first bypass passage 236A preferably includes a first independent passage 239A continuous with the common passage 240. A first passage port 237A is provided between the first independent passage 239A and the common passage 240. The second bypass passage 236B preferably includes: a second independent passage 239B continuous with the common passage 240; and a flow restrictor 235. A second passage port 237B is provided between the second independent passage 239B and the common passage 240. The flow restrictor 235 is a valve capable of adjusting the amount of air flowing through the second independent passage 239B. A third passage port 237C is provided between the common passage 240 and the main passage 234. Note that the flow restrictor 235 does not necessarily have to be provided in the second independent passage 239B, but may alternatively be provided in the first independent passage 239A or both of the first and second independent passages 239A and 239B.

As illustrated in FIG. 13A, a valve device 256 preferably includes a common valve 245 capable of opening and closing the first, second and third passage ports 237A, 237B and 237C. The amount of air flowing through the first and second bypass passages 236A and 236B can be controlled by adjusting an opening of the common valve 245. The common valve 245 preferably includes a solenoid valve operable in multiple steps. The solenoid valve preferably includes: a solenoid 260 operable in multiple steps (e.g., three steps in this variation); a shaft 262 driven by the solenoid 260 so as to be moved in a vertical direction in FIGS. 13A to 13C; and a valve body 264 attached to a tip of the shaft 262. The valve body 264 is provided so as to be slidable along an inner peripheral surface of the common passage 240 by the solenoid 260.

The solenoid 260 preferably includes a containing portion 266, a spring portion 268, a core 276, a first magnet coil 270, a second magnet coil 272, and a third magnet coil 274. One end of the core 276 is connected to the spring portion 268, and the other end of the core 276 is connected to the shaft 262.

The containing portion 266 is connected to one end of the common passage 240. The first, second and third magnet coils 270, 272 and 274 are each provided outward of the containing portion 266.

In the valve device 256, the first magnet coil 270, the second magnet coil 272 and/or the third magnet coil 274 is/are selectively energized by the ECU 90 (see FIG. 2), thus generating an electromagnetic force. As a result, the core 276 moves within the containing portion 266.

As illustrated in FIG. 13A, the third passage port 237C is closed by the common valve 245 of the valve device 256 before startup of the engine 4 (during cranking). Specifically, inside the containing portion 266, the core 276 moves to a position inwardly of the first magnet coil 270, and thus the valve body 264 closes the third passage port 237C. In this case, no air flows to the main passage 234 via the first and second bypass passages 236A and 236B. Hence, as illustrated in FIG. 10, the amount of intake air is kept low during the period X1 before startup of the engine 4. Note that the third passage port 237C may be opened intermittently before startup of the engine 4. For example, air may be allowed to flow to the main passage 234 via the first bypass passage 236A and/or the second bypass passage 236B by moving the core 276.

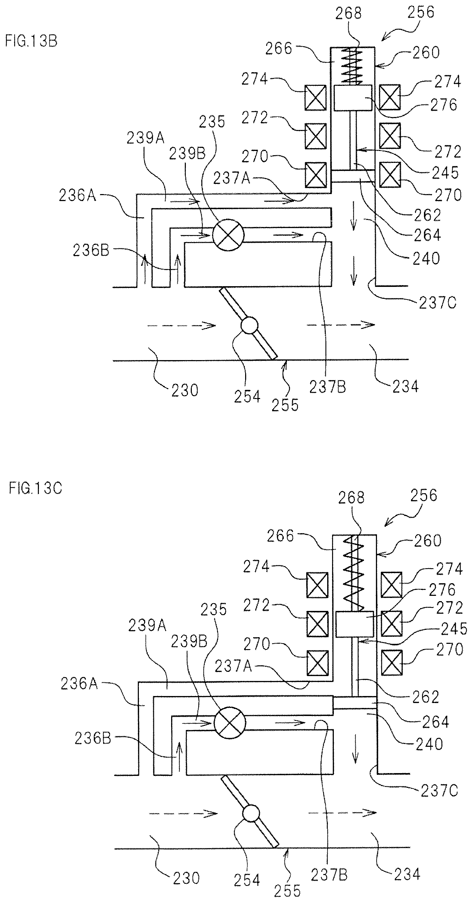

As illustrated in FIG. 13B, the first, second and third passage ports 237A, 237B and 237C are opened by the common valve 245 of the valve device 256 during cold idling. Specifically, inside the containing portion 266, the core 276 moves to a position inward of the third magnet coil 274, and thus the valve body 264 opens the first, second and third passage ports 237A, 237B and 237C. In this case, air flows to the main passage 234 via the first and second bypass passages 236A and 236B. Hence, as illustrated in FIG. 10, the amount of intake air can be increased during the period X2 corresponding to cold idling of the engine 4.

As illustrated in FIG. 13C, the first passage port 237A is closed and the second and third passage ports 237B and 237C are opened by the common valve 245 of the valve device 256 during warm idling. Specifically, inside the containing portion 266, the core 276 moves to a position inward of the second magnet coil 272, and thus the valve body 264 closes the first passage port 237A but opens the second and third passage ports 237B and 237C. In this case, air flows to the main passage 234 via the second bypass passage 236B. Hence, as illustrated in FIG. 10, the amount of intake air can be kept at an intermediate level during the period X3 corresponding to warm idling of the engine 4.

### Effects of Preferred Embodiments

As described above, in the engine 4 installed on the motorcycle 1 according to the present preferred embodiment, the second control section 105 changes the opening of the first valve 38A from the opening A1 equal to or smaller than the first opening to the opening A2 greater than the first opening and from the opening A2 to the opening A1 during a period between the start of the intake stroke of one cycle and the end of the exhaust stroke thereof. Since the timing of changing of the opening of the first valve 38A can be adjusted freely, the amount of intake air and the amount of burnt gas can be controlled independently. Note that in the present preferred embodiment, the opening of the first valve 38A is changed from the opening A1 to the opening A2 and from the opening A2 to the opening A1 in a stepwise manner. Thus, the opening of the first valve 38A is preferably instantaneously changed.

According to the present preferred embodiment, the second control section 105 is configured to change the opening of the first valve 38A from the opening A1 equal to or smaller than the first opening to the opening A2 greater than the first opening when the intake valve 32 is opened. Thus, the amount of intake air is controlled independently from the amount of burnt gas.

According to the present preferred embodiment, the second control section 105 is configured to change the opening of the first valve 38A from the opening A1 equal to or smaller than the first opening to the opening A2 greater than the first opening and from the opening A2 to the opening A1 when the intake valve 32 is opened. Thus, the amount of intake air is controlled independently from the amount of burnt gas.

According to the present preferred embodiment, the second control section 105 is configured to change the opening of the first valve 38A from the opening A2 greater than the first opening to the opening A1 equal to or smaller than the first opening when the intake valve 32 is closed. Thus, the amount of burnt gas is controlled independently from the amount of intake air.

According to the present preferred embodiment, the second control section 105 is configured to change the opening of the first valve 38A from the opening A1 equal to or smaller than the first opening to the opening A2 greater than the first opening and from the opening A2 to the opening A1 when the intake valve 32 is closed. Thus, the amount of burnt gas is controlled independently from the amount of intake air.

According to the present preferred embodiment, the second control section 105 is configured to change the opening of the first valve 38A from the opening A1 equal to or smaller than the first opening to the opening A2 greater than the first opening and from the opening A2 to the opening A1 when the intake valve 32 is opened, and to change the opening of the first valve 38A from the opening A1 to the opening A2 and from the opening A2 to the opening A1 when the intake valve 32 is closed. Thus, the amount of intake air and the amount of burnt gas are controlled independently.

According to the present preferred embodiment, the second control section 105 is configured to change the opening of the first valve 38A from the opening A1 equal to or smaller than the first opening to the opening A2 greater than the first opening when the intake valve 32 is opened, keep the opening of the first valve 38A at the opening A2 until the intake valve 32 is closed, and change the opening of the first valve 38A from the opening A2 to the opening A1 when the intake valve 32 is closed. Thus, the amount of intake air and the amount of burnt gas are controlled independently.

According to the present preferred embodiment, the intake passage 30 includes: the main passage 34; and the first bypass passage 36A provided in parallel with the main passage 34. The first valve 38A is disposed in the first bypass passage 36A. When the intake passage 30 is a single passage, a flow passage area of this passage is large and thus a valve disposed in this passage is large. However, in the present preferred embodiment, the first valve 38A disposed in the first bypass passage 36A can be reduced in size as compared with the valve disposed in the intake passage 30 which is a single passage. Accordingly, the valve opening can be changed quickly since the small-size first valve 38A is used.

According to the present preferred embodiment, the first valve 38A includes a solenoid valve. A solenoid valve is operable at high speed and is relatively inexpensive. Accordingly, the opening of the first valve 38A can be quickly changed by using a solenoid valve as the first valve 38A.

According to the present preferred embodiment, the first valve 38A is adapted so as to be switchable between the closed state in which the first bypass passage 36A is closed and the open state in which the first bypass passage 36A is opened. The first opening is the opening obtained when the first valve 38A is in the closed state. Thus, the control is facilitated because it is only necessary to switch the first valve 38A between the closed state and the open state. Accordingly, the independent control of the amount of intake air and the amount of burnt gas is further facilitated.

According to the embodiment concerning the startup control, the first cycle is a cycle prior to occurrence of a first explosion in the combustion chamber 25 or a cycle in which the first explosion occurs in the combustion chamber 25. Thus, startup performance of the internal combustion engine can be enhanced.

According to the present preferred embodiment, the engine 4 further includes: the exhaust passage 40 through which exhaust gas inside the combustion chamber 25 is discharged; and the exhaust valve 42 that opens and closes communication between the combustion chamber 25 and the exhaust passage 40. Both of the intake valve 32 and the exhaust valve 42 are opened in a portion of the intake stroke and/or a portion of the exhaust stroke. When both of the intake valve 32 and the exhaust valve 42 are opened, burnt gas inside the combustion chamber 25 is likely to flow backward to the intake passage 30. Therefore, the opening of the first valve 38A is changed from the opening A1 equal to or smaller than the first opening to the opening A2 greater than the first opening, and is further changed to the opening A1, thus making it possible to inhibit burnt gas from flowing backward to the intake passage 30.

According to the present preferred embodiment, the fuel contains alcohol. The alcohol-containing fuel, i.e., the fuel partially containing alcohol or the fuel containing alcohol in its entirety, has low volatility and is resistant to vaporization, and therefore, the above-described effects are more pronounced.

The engine 4 according to the present preferred embodiment is a single-cylinder engine. As compared with a multi-cylinder engine in which air is supplied to a plurality of combustion chambers from one intake passage, the single-cylinder engine 4 can control the amount of intake air and the amount of burnt gas with high accuracy by changing the opening of the first valve 38A.

Note that the engine 4 according to the present preferred embodiment is not limited to a single-cylinder engine, but may be a multi-cylinder engine as long as each cylinder includes an independent intake passage.

According to the present preferred embodiment, it is disclosed a method for controlling a four-stroke internal combustion engine comprising an intake passage 30 through which air is guided to a combustion chamber. An intake valve 32 opens and closes communication between the combustion chamber 25 and the intake passage 30. A fuel injection device 52 is provided through which a fuel is injected to the intake passage 30 or the combustion chamber 25. At least one valve 38A,38B is disposed in the intake passage 30. The method comprises: changing an opening of the valve 38A,38B from an opening equal to or smaller than a first opening to a second opening greater than the first opening and from the second opening greater than the first opening to the opening equal to or smaller than the first opening during a period between start of an intake stroke of one cycle and end of an exhaust stroke thereof. Said method further comprises: changing the opening of the valve 38A,38B from the opening equal to or smaller than the first opening to the second opening greater than the first opening when the intake valve 32 is opened. Preferably, the method further comprises: changing the opening of the valve 38A,38B from the opening equal to or smaller than the first opening to the second opening greater than the first opening when the intake valve 32 is opened and changing the opening of the valve 38A,38B from said second opening greater than the said opening to the opening equal to or smaller than the first opening when the intake valve 32 is opened. Said method further comprises: changing the opening of the valve 38A,38B from the second opening greater than the first opening to the opening equal to or smaller than the first opening when the intake valve 32 is closed. Preferably, changing the opening of the valve 38A,38B from the second opening greater than the first opening to the opening equal to or smaller than the first opening when the intake valve 32 is closed, and changing the opening of the valve 38A,38B from said second opening greater than the first opening to the opening equal to or smaller than the first opening when the intake valve 32 is closed.

### REFERENCE SIGNS LIST

- 1: motorcycle (straddle-type vehicle)
- 4: engine (internal combustion engine)
- 25: combustion chamber
- 30: intake passage
- 32: intake valve
- 34: main passage
- 36A: first bypass passage
- 37A: first passage port
- 38A: first valve
- 42: exhaust valve
- 52: fuel injection valve
- 54: throttle valve
- 56: valve device
- 60A: solenoid
- 62A: shaft
- 64A: valve body
- 70: rotational speed sensor
- 90: ECU (controller)
- 100: first control section
- 105: second control section

## Claims

1. A four-stroke internal combustion engine comprising:
an intake passage (30) through which air is guided to a combustion chamber;
an intake valve (32) that opens and closes communication between the combustion chamber (25) and the intake passage (30);
a fuel injection device (52) through which a fuel is injected to the intake passage (30) or the combustion chamber (25);
at least one further valve (38A,38B) disposed in the intake passage (30); and
a controller (90) that controls the further valve (38A,38B) at startup of an internal combustion engine,
wherein the controller (90) is configured to change an opening of the further valve (38A,38B) from an opening equal to or smaller than a first opening to a second opening greater than the first opening and from the second opening greater than the first opening to the opening equal to or smaller than the first opening during a period between start of an intake stroke of one cycle and end of an exhaust stroke thereof, wherein the cycle is a cycle prior to occurrence of a first explosion in the combustion chamber (25) or a cycle in which the first explosion occurs in the combustion chamber (25).

2. An internal combustion engine according to claim 1, wherein the controller (90) is configured to change the opening of the further valve (38A,38B) from the opening equal to or smaller than the first opening to the second opening greater than the first opening when the intake valve (32) is open, and preferably the controller (90) is further configured to change the opening of the further valve (38A,38B) from said second opening greater than the said opening to the opening equal to or smaller than the first opening when the intake valve (32) is open.

3. An internal combustion engine according to claim 1 or 2, wherein the controller (90) is configured to change the opening of the further valve (38A,38B) from the second opening greater than the first opening to the opening equal to or smaller than the first opening when the intake valve (32) is closed, and preferably the controller (90) is further configured to change the opening of the further valve (38A,38B) from said second opening greater than the first opening to the opening equal to or smaller than the first opening when the intake valve (32) is closed.

4. An internal combustion engine according to at least one of the claims 1 to 3, wherein the intake passage (30) comprises a main passage (34), and at least one bypass passage (36A,36B) provided in parallel with the main passage (34), wherein the further valve (38A,38B) is disposed in the bypass passage (36A,36B).

5. An internal combustion engine according to at least one of the claims 1 to 4, wherein the further valve (38A,38B) comprises a solenoid valve.

6. An internal combustion engine according to claim 5, wherein the solenoid valve is adapted so as to be switchable between a closed state in which the bypass passage (36A,36B) is closed and an open state in which the bypass passage (36A,36B) is opened, wherein the first opening is an opening obtained when the solenoid valve is in the closed state.

7. An internal combustion engine according to at least one of the claims 1 to 6, wherein the internal combustion engine further comprises:
an exhaust passage (40) through which exhaust gas inside the combustion chamber (25) is discharged; and
an exhaust valve (42) that opens and closes communication between the combustion chamber (25) and the exhaust passage (40), wherein both of the intake and exhaust valves (32,42) are opened in a portion of the intake stroke and/or a portion of the exhaust stroke.

8. An internal combustion engine according to at least one of the claims 1 to 7, wherein the engine is adapted to use fuel that contains alcohol.

9. An internal combustion engine according to at least one of the claims 1 to 8, wherein the internal combustion engine is a single-cylinder internal combustion engine.

10. An internal combustion engine according to at least one of the claims 1 to 9, wherein a throttle valve (54) is arranged in said intake passage, and said at least one further valve (38A,38B) is arranged as a further valve in parallel with the throttle valve (54).

11. A straddle-type vehicle comprising an internal combustion engine according to at least one of the claims 1 to 10.

12. A method for controlling a four-stroke internal combustion engine comprising an intake passage (30) through which air is guided to a combustion chamber;
an intake valve (32) that opens and closes communication between the combustion chamber (25) and the intake passage (30);
a fuel injection device (52) through which a fuel is injected to the intake passage (30) or the combustion chamber (25);
at least one further valve (38A,38B) disposed in the intake passage (30);
wherein the method comprises:
at startup of an internal combustion engine, changing an opening of the further valve (38A,38B) from an opening equal to or smaller than a first opening to a second opening greater than the first opening and from the second opening greater than the first opening to the opening equal to or smaller than the first opening during a period between start of an intake stroke of one cycle and end of an exhaust stroke thereof, wherein the cycle is a cycle prior to occurrence of a first explosion in the combustion chamber (25) or a cycle in which the first explosion occurs in the combustion chamber (25).

13. A method for controlling a four-stroke internal combustion engine according to claim 12, further comprising:
changing the opening of the further valve (38A,38B) from the opening equal to or smaller than the first opening to the second opening greater than the first opening when the intake valve (32) is open, and preferably
changing the opening of the further valve (38A,38B) from said second opening greater than the said opening to the opening equal to or smaller than the first opening when the intake valve (32) is open.

14. A method for controlling a four-stroke internal combustion engine according to claim 12 or 13, further comprising:
changing the opening of the further valve (38A,38B) from the second opening greater than the first opening to the opening equal to or smaller than the first opening when the intake valve (32) is closed, and preferably
changing the opening of the further valve (38A,38B) from said second opening greater than the first opening to the opening equal to or smaller than the first opening when the intake valve (32) is closed.

## Patentansprüche

1. Eine Vier-Takt-Brenn-Kraftmaschine mit innerer Verbrennung, die umfasst:
einen Einlass-Durchgang (30), durch den Luft in eine Brenn-Kammer geführt ist;
ein Einlass-Ventil (32), welches eine Kommunikation zwischen der Brenn-Kammer (25) und dem Einlass-Durchgang (30) öffnet und schließt;
eine Kraftstoff-Einspritzvorrichtung (52), durch welche ein Kraftstoff in den Einlass-Durchgang (30) oder in die Brenn-Kammer (25) eingespritzt ist;
zumindest ein weiteres Ventil (38A, 38B), das in dem Einlass-Durchgang (30) positioniert ist; und
eine Steuerung (90), welche das weitere Ventil (38A, 38B) beim Start einer Brenn-Kraftmaschine mit innerer Verbrennung steuert,
wobei die Steuerung (90) konfiguriert ist, um eine Öffnung des weiteren Ventils (38A, 38B) von einer Öffnung, gleich zu oder kleiner als einer ersten Öffnung, zu einer zweiten Öffnung, größer als die erste Öffnung, und von der zweiten Öffnung, größer als die erste Öffnung, zu der Öffnung gleich oder kleiner als die erste Öffnung, während einer Periode zwischen Start eines Einlass-Taktes eines Zyklus und Ende von einem Aulass-Takt desselben zu ändern, wobei der Zyklus ein Zyklus vor dem Auftreten einer ersten Explosion in der Brenn-Kammer (25) ist, oder ein Zyklus ist, indem die erste Explosion in der Brenn-Kammer (25) auftritt.

2. Eine Brenn-Kraftmaschine mit innerer Verbrennung gemäß Anspruch 1, wobei die Steuerung (90) konfiguriert ist, um die Öffnung des weiteren Ventils (38A, 38B) von der Öffnung, gleich oder kleiner als der ersten Öffnung, zu der zweiten Öffnung, größer als die erste Öffnung, zu ändern, wenn das Einlass-Ventil (32) offen ist, und bevorzugt die Steuerung (90) weiter konfiguriert ist, die Öffnung des weiteren Ventils (38A, 38B) von dieser zweiten Öffnung, größer als diese Öffnung, zu der Öffnung, gleich oder kleiner als die erste Öffnung, zu ändern, wenn das Einlass-Ventil (32) offen ist.

3. Eine Brenn-Kraftmaschine mit innerer Verbrennung gemäß Anspruch 1 oder 2, wobei die Steuerung (90) konfiguriert ist, um die Öffnung des weiteren Ventils (38A, 38B) von der zweiten Öffnung, größer als die erste Öffnung, zu der Öffnung, gleich oder kleiner als die erste Öffnung, zu ändern, wenn das Einlass-Ventil (32) geschlossen ist, und bevorzugt die Steuerung (90) weiter konfiguriert ist, um die Öffnung des weiteren Ventils (38A, 38B) von dieser zweiten Öffnung, größer als die erste Öffnung, zu der Öffnung, gleich oder kleiner als die erste Öffnung, zu ändern, wenn das Einlass-Ventil (32) geschlossen ist.

4. Eine Brenn-Kraftmaschine mit innerer Verbrennung gemäß zumindest einem der Ansprüche 1 bis 3, wobei der Einlass-Durchgang (30) einen Haupt-Durchgang (34), und zumindest ein Umgehungs-Durchgang (36a, 36b), der parallel mit dem Haupt-Durchgang (34) vorgesehen ist, umfasst, wobei das weitere Ventil (38A, 38B) in dem Umgehungs-Durchgang (36a, 36b) positioniert ist.

5. Eine Brenn-Kraftmaschine mit innerer Verbrennung gemäß zumindest einem der Ansprüche 1 bis 4, wobei das weitere Ventil (38A, 38B) ein Solenoid-Ventil umfasst.

6. Eine Brenn-Kraftmaschine mit innerer Verbrennung gemäß Anspruch 5, wobei das Solenoid-Ventil angepasst ist, um zwischen einem geschlossenen Zustand, in welchem der Umgehungs-Durchgang (36a, 36b) geschlossen ist, und einen offenen Zustand, in welchem der Umgehungs-Durchgang (36a, 36b) geöffnet ist, schaltbar ist, wobei die erste Öffnung eine Öffnung ist, die erhalten wird, wenn das Solenoid-Ventil in dem geschlossenen Zustand ist.

7. Eine Brenn-Kraftmaschine mit innerer Verbrennung gemäß zumindest einem der Ansprüche 1 bis 6, wobei die Brenn-Kraftmaschine mit innerer Verbrennung weiterhin umfasst:
einen Auslass-Durchgang (40), durch den Abgas inner, halb der Brenn-Kammer (25), abgegeben wird; und
ein Auslass-Ventil (42), welches Kommunikation zwischen der Brenn-Kammer (25) und dem Auslass-Durchgang (40) öffnet und schließt, wobei beide von dem Einlass- und Auslass-Ventil (32, 42) in einem Abschnitt des Einlass-Takts und / oder einem Abschnitt des Auslass-Takts geöffnet sind.

8. Eine Brenn-Kraftmaschine mit innerer Verbrennung gemäß zumindest einem der Ansprüche 1 bis 7, wobei die Maschine angepasst ist Kraftstoff zu verwenden, der Alkohol beinhaltet.

9. Eine Brenn-Kraftmaschine mit innerer Verbrennung gemäß zumindest einem der Ansprüche 1 bis 8, wobei die Brenn-Kraftmaschine mit innerer Verbrennung eine EinZylinder-Brenn-Kraftmaschine mit innerer Verbrennung ist.

10. Eine Brenn-Kraftmaschine mit innerer Verbrennung gemäß zumindest einem der Ansprüche 1 bis 9, wobei ein Drossel-Ventil (54) in diesem Einlass-Durchgang angeordnet ist, und dieses zumindest eine weitere Ventil (38A, 38B) als ein weiteres Ventil, parallel mit dem Drossel-Ventil (54) angeordnet ist.

11. Ein Spreiz-Sitz-Typ-Fahrzeug, das eine Brenn-Kraftmaschine gemäß zumindest einem der Ansprüche 1 bis 10 umfasst.

12. Ein Verfahren zur Steuerung einer Vier-Takt-Brenn-Kraftmaschine mit innerer Verbrennung, die einen Einlass-Durchgang (30), durch den Luft in eine Brenn-Kammer geführt ist;
ein Einlass-Ventil (32), welches eine Kommunikation zwischen der Brenn-Kammer (25) und dem Einlass-Durchgang (30) öffnet und schließt;
eine Kraftstoff-Einspritzvorrichtung (52), durch welche ein Kraftstoff in den Einlass-Durchgang (30) oder in die Brenn-Kammer (25) eingespritzt ist;
zumindest ein weiteres Ventil (38A, 38B), das in dem Einlass-Durchgang (30) positioniert ist, umfasst;
wobei das Verfahren umfasst:
beim Start einer Brenn-Kraftmaschine mit innerer Verbrennung, Ändern einer Öffnung des weiteren Ventils (38A, 38B) von einer Öffnung, gleich zu oder kleiner als einer ersten Öffnung, zu einer zweiten Öffnung, größer als die erste Öffnung, und von der zweiten Öffnung, größer als die erste Öffnung, zu der Öffnung gleich oder kleiner als die erste Öffnung, während einer Periode zwischen Start eines Einlass-Taktes eines Zyklus und Ende von einem Aulass-Takt desselben, wobei der Zyklus ein Zyklus vor dem Auftreten einer ersten Explosion in der Brenn-Kammer (25) ist, oder ein Zyklus ist, indem die erste Explosion in der Brenn-Kammer (25) auftritt.

13. Ein Verfahren zur Steuerung einer Brenn-Kraftmaschine mit innerer Verbrennung gemäß Anspruch 12, das weiter umfasst:
Ändern der Öffnung des weiteren Ventils (38A, 38B) von der Öffnung, gleich oder kleiner als der ersten Öffnung, zu der zweiten Öffnung, größer als die erste Öffnung, wenn das Einlass-Ventil (32) offen ist, und bevorzugt
Ändern der Öffnung des weiteren Ventils (38A, 38B) von dieser zweiten Öffnung, größer als diese Öffnung, zu der Öffnung, gleich oder kleiner als die erste Öffnung, wenn das Einlass-Ventil (32) offen ist.

14. Ein Verfahren zur Steuerung einer Brenn-Kraftmaschine mit innerer Verbrennung gemäß Anspruch 12 oder 13, das weiter umfasst:
Ändern der Öffnung des weiteren Ventils (38A, 38B) von der zweiten Öffnung, größer als die erste Öffnung, zu der Öffnung, gleich oder kleiner als die erste Öffnung, wenn das Einlass-Ventil (32) geschlossen ist, und bevorzugt
Ändern der Öffnung des weiteren Ventils (38A, 38B) von dieser zweiten Öffnung, größer als die erste Öffnung, zu der Öffnung, gleich oder kleiner als die erste Öffnung, wenn das Einlass-Ventil (32) geschlossen ist.

## Revendications

1. Moteur à combustion interne à quatre temps comprenant :
un passage d'admission (30) à travers lequel de l'air est guidé vers une chambre de combustion ;
une soupape d'admission (32) qui ouvre et ferme une communication entre la chambre de combustion (25) et le passage d'admission (30) ;
un dispositif d'injection de carburant (52) à travers lequel un carburant est injecté dans le passage d'admission (30) ou dans la chambre de combustion (25) ;
au moins une soupape additionnelle (38A, 38B) disposée dans le passage d'admission (30) ; et
un contrôleur (90) qui contrôle la soupape additionnelle (38A, 38B) au démarrage d'un moteur à combustion interne,
dans lequel le contrôleur (90) est configuré pour changer l'ouverture de la soupape additionnelle (38A, 38B) depuis une ouverture inférieure ou égale à une première ouverture jusqu'à une deuxième ouverture supérieure à la première ouverture et depuis la deuxième ouverture supérieure à la première ouverture jusqu'à l'ouverture inférieure ou égale à la première ouverture durant une période comprise entre le début de la course d'admission d'un cycle et la fin de sa course d'échappement, dans lequel le cycle est un cycle antérieur à l'occurrence d'une première explosion dans la chambre de combustion (25) ou un cycle dans lequel la première explosion se produit dans la chambre de combustion (25).

2. Moteur à combustion interne selon la revendication 1, dans lequel le contrôleur (90) est configuré pour changer l'ouverture de la soupape additionnelle (38A, 38B) depuis l'ouverture inférieure ou égale à la première ouverture jusqu'à la deuxième ouverture supérieure à la première ouverture quand la soupape d'admission (32) est ouverte, et de préférence le contrôleur (90) est en outre configuré pour changer l'ouverture de la soupape additionnelle (38A, 38B) depuis ladite deuxième ouverture supérieure à ladite ouverture jusqu'à l'ouverture inférieure ou égale à la première ouverture quand la soupape d'admission (32) est ouverte.

3. Moteur à combustion interne selon la revendication 1 ou 2, dans lequel le contrôleur (90) est configuré pour changer l'ouverture de la soupape additionnelle (38A, 38B) depuis la deuxième ouverture supérieure à la première ouverture jusqu'à l'ouverture inférieure ou égale à la première ouverture quand la soupape d'admission (32) est fermée, et de préférence le contrôleur (90) est en outre configuré pour changer l'ouverture de la soupape additionnelle (38A, 38B) depuis ladite deuxième ouverture supérieure à la première ouverture jusqu'à l'ouverture inférieure ou égale à la première ouverture quand la soupape d'admission (32) est fermée.

4. Moteur à combustion interne selon au moins l'une des revendications 1 à 3, dans lequel le passage d'admission (30) comprend un passage principal (34) et au moins un passage de dérivation (36A, 36B) pourvu en parallèle au passage principal (34), dans lequel la soupape additionnelle (38A, 38B) est disposée dans le passage de dérivation (36A, 36B).

5. Moteur à combustion interne selon au moins l'une des revendications 1 à 4, dans lequel la soupape additionnelle (38A, 38B) comprend une électrovanne.

6. Moteur à combustion interne selon la revendication 5, dans lequel l'électrovanne est adaptée de manière à être commutable entre un état fermé dans lequel le passage de dérivation (36A, 36B) est fermé et un état ouvert dans lequel le passage de dérivation (36A, 36B) est ouvert, dans lequel the première ouverture est une ouverture obtenue quand l'électrovanne se trouve dans l'état fermé.

7. Moteur à combustion interne selon au moins l'une des revendications 1 à 6, dans lequel le moteur à combustion interne comprend en outre :
un passage d'échappement (40) à travers lequel s'échappe un gaz d'échappement présent dans la chambre de combustion (25) ; et
une soupape d'échappement (42) qui ouvre et ferme la communication entre la chambre de combustion (25) et le passage d'échappement (40), dans lequel les soupapes d'admission et d'échappement (32, 42) sont ouvertes dans une portion de la course d'admission et/ou une portion de la course d'échappement.

8. Moteur à combustion interne selon au moins l'une des revendications 1 à 7, dans lequel le moteur est adapté pour utiliser un carburant qui contient de l'alcool.

9. Moteur à combustion interne selon au moins l'une des revendications 1 à 8, dans lequel le moteur à combustion interne est un moteur à combustion interne monocylindre.

10. Moteur à combustion interne selon au moins l'une des revendications 1 à 9, dans lequel une vanne d'étranglement (54) est agencée dans ledit passage d'admission, et ladite au moins une soupape additionnelle (38A, 38B) est agencée comme une soupape additionnelle en parallèle à la vanne d'étranglement (54).

11. Véhicule à enfourcher comprenant un moteur à combustion interne selon au moins l'une des revendications 1 à 10.

12. Procédé de contrôle d'un moteur à combustion interne à quatre temps comprenant
un passage d'admission (30) à travers lequel de l'air est guidé vers une chambre de combustion ;
une soupape d'admission (32) qui ouvre et ferme une communication entre la chambre de combustion (25) et le passage d'admission (30) ;
un dispositif d'injection de carburant (52) à travers lequel un carburant est injecté dans le passage d'admission (30) ou dans la chambre de combustion (25) ;
au moins une soupape additionnelle (38A, 38B) disposée dans le passage d'admission (30) ;
dans lequel le procédé comprend :
au démarrage du moteur à combustion interne, le changement de l'ouverture de la soupape additionnelle (38A, 38B) depuis une ouverture inférieure ou égale à une première ouverture jusqu'à une deuxième ouverture supérieure à la première ouverture et depuis la deuxième ouverture supérieure à la première ouverture jusqu'à l'ouverture inférieure ou égale à la première ouverture durant une période comprise entre le début de la course d'admission d'un cycle et la fin de sa course d'échappement, dans lequel le cycle est un cycle antérieur à l'occurrence d'une première explosion dans la chambre de combustion (25) ou un cycle dans lequel la première explosion se produit dans la chambre de combustion (25).

13. Procédé de contrôle d'un moteur à combustion interne à quatre temps selon la revendication 12, comprenant en outre :
le changement de l'ouverture de la soupape additionnelle (38A, 38B) depuis l'ouverture inférieure ou égale à la première ouverture jusqu'à la deuxième ouverture supérieure à la première ouverture quand la soupape d'admission (32) est ouverte, et, de préférence,
le changement de l'ouverture de la soupape additionnelle (38A, 38B) depuis ladite deuxième ouverture supérieure à ladite ouverture jusqu'à l'ouverture inférieure ou égale à la première ouverture quand la soupape d'admission (32) est ouverte.

14. Procédé de contrôle d'un moteur à combustion interne à quatre temps selon la revendication 12 ou 13, comprenant en outre :
le changement de l'ouverture de la soupape additionnelle (38A, 38B) depuis la deuxième ouverture supérieure à la première ouverture jusqu'à l'ouverture inférieure ou égale à la première ouverture quand la soupape d'admission (32) est fermée, et, de préférence,
le changement de l'ouverture de la soupape additionnelle (38A, 38B) depuis ladite deuxième ouverture supérieure à la première ouverture jusqu'à l'ouverture inférieure ou égale à la première ouverture quand la soupape d'admission (32) est fermée.
